# EUROPEAN PATENT APPLICATION

(11) **EP 4 560 436 A1**
(43) Date of publication of application: **28.05.2025**
(21) Application number: 24795082.7
(22) Date of filing: 04.10.2024
(51) Int. Cl.: G06F 1/16

(54) **ELECTRONIC DEVICE COMPRISING FLEXIBLE DISPLAY**

(30) Priority: 04.10.2023 KR 20230131981; 20.12.2023 KR 20230187418
(71) Applicant: Samsung Electronics Co., Ltd, Suwon-si, Gyeonggi-do 16677 (KR)
(72) Inventor: SONG, Kwonho, Suwon-si Gyeonggi-do 16677 (KR); CHOI, Seongwoo, Suwon-si Gyeonggi-do 16677 (KR); CHOI, Seungyeop, Suwon-si Gyeonggi-do 16677 (KR)
(74) Representative: HGF
(86) International application number: PCT/KR2024/015114
(87) International publication number: WO 2025/075442

(57) **Abstract**

An electronic device according to an embodiment disclosed in the present document may include a hinge device, a first housing connected to the hinge device, a second housing connected to the hinge device so as to be rotatable relative to the first housing, and a flexible display supported by the first housing and the second housing, in which the flexible display includes a first display portion having a first degree of movement in accordance with rotational operations of the first housing and the second housing, a second display portion having a second degree of movement smaller than the first degree of movement in accordance with the rotational operations of the first housing and the second housing, a first protective material positioned to cover at least a part of a lateral surface of the first display portion and having a first modulus, and a second protective material positioned to cover at least a part of a lateral surface of the second display portion and having a second modulus higher than the first modulus. In addition, various embodiments may be included.

## Description

### [Technical Field]

Various embodiments disclosed in the present document relate to an electronic device including a flexible display.

### [Background Art]

Many Electronic devices are gradually becoming slimmer, and the design factors of the electronic device are being enhanced and improved so that the electronic devices have improved rigidity, and the electronic devices have distinct functional elements. Electronic devices may gradually have various shapes departing from a uniform rectangular shape. Electronic devices may have a deformable structure so that a user may conveniently carry the electronic device and use a large screen display. For example, the electronic device having the deformable structure may include foldable housings that operate while being folded or unfolded with respect to one another. The electronic device may require improved durability, which allows the electronic device to withstand an external impact, and a support structure for improving surface quality of a flexible display in accordance with a folding operation.

### [Disclosure of Invention]

### [Technical Problem]

A foldable electronic device may include a hinge device (e.g., a hinge structure or a hinge module), and first and second housings foldably connected to each other by means of the hinge device. The first and second housings may be foldably connected in that the first housing is able to rotate with respect to the second housing such that the electronic device is foldable. The foldable electronic device may operate in an in-folding and/or out-folding manner as the first housing rotates within a range of 0 to 360 degrees relative to the second housing by means of the hinge device. The foldable electronic device may operate in an in-folding and/or out-folding manner as the first housing rotates from substantially 0 to substantially 180 degrees relative to the second housing by means of the hinge device. The foldable electronic device may include a flexible display disposed to be at least partially supported by the first and second housings, and exposed for use when the first and second housings are in an unfolded state. The flexible display may include a plurality of layers (e.g., window layers, POLs, polymer layers, or at least one functional layer) disposed on a top surface and/or a bottom surface based on a display panel.

The foldable electronic device may exclude a protective cover (e.g., a decorative cover or a protective frame) disposed so that an edge area (e.g., an edge) of a display of the flexible display is invisible from the outside. For example, in the electronic device, from which the protective cover is excluded, the flexible display may be supported by the first and second housings and disposed such that the edges are visible from the outside. In this case, the edge area of the flexible display may be vulnerable to external foreign substances or an external impact. In particular, because the edge area including a bending portion (e.g., COP (chip-on-panel or chip-on-plastic) extending from the display panel is vulnerable to an external impact, the edge area may be damaged, which may cause an erroneous operation. This problem may be addressed by the present disclosure.

However, the object to be achieved by the present disclosure is not limited to the above-mentioned objects but may be variously expanded without departing from the spirit and scope of the present disclosure.

### [Solution to Problem]

An electronic device according to an embodiment disclosed in the present document may include a hinge device, a first housing connected to the hinge device, a second housing connected to the hinge device so as to be rotatable relative to the first housing, and a flexible display supported by the first housing and the second housing, in which the flexible display includes a first display portion having a first degree of movement in accordance with rotational operations of the first housing and the second housing, a second display portion having a second degree of movement smaller than the first degree of movement in accordance with the rotational operations of the first housing and the second housing, a first protective material positioned to cover at least a part of a lateral surface of the first display portion and having a first modulus, and a second protective material positioned to cover at least a part of a lateral surface of the second display portion and having a second modulus higher than the first modulus.

An electronic device according to another embodiment of the present disclosure may include a first housing, a second housing, a hinge device configured to connect the first housing and the second housing so that the first housing and the second housing are foldable, and a flexible display supported by the first housing and the second housing and including a plurality of layers, in which the flexible display includes a first layer having a first amount of slip movement in accordance with a folding operation and a unfolding operation of the first housing and the second housing, a second layer having a second amount of slip movement smaller than the first amount of slip movement in accordance with the folding operation and the unfolding operation of the first housing and the second housing and positioned below the first layer, a first protective material positioned to cover at least a part of a lateral surface of the first layer and having a first modulus, and a second protective material positioned to cover at least a part of a lateral surface of the second layer and having a second modulus higher than the first modulus.

An electronic device according to still another embodiment of the present disclosure may include a first housing, a second housing, a hinge device configured to connect the first housing and the second housing so that the first housing and the second housing are foldable, and a flexible display supported by the first housing and the second housing, in which the flexible display includes a folding portion configured to be bent in accordance with folding operations of the first housing and the second housing, planar portions configured to be kept planar during the folding operations of the first housing and the second housing, a first protective material positioned on at least a part of a lateral surface of the folding portion and having a first modulus, and a second protective material positioned on at least a part of a lateral surface of the planar portion and having a second modulus higher than the first modulus.

### [Advantageous Effects of Invention]

The flexible display according to the embodiment of the present disclosure may be divided into a first display portion and a second display portion depending on a degree of movement or a deformation amount. A soft protective material may be disposed on the lateral surface of the first display portion having a relatively large degree of movement (e.g., the folding portion of the flexible display or the layers having a relatively large amount of occurrence of a slip among the plurality of layers of the flexible display). A hard protective material may be disposed on the lateral surface of the second display portion having a relatively small degree of movement (e.g., the planar portions of the flexible display or the layers having a relatively small amount of occurrence of a slip among the plurality of layers of the flexible display). Therefore, in the flexible display, the movement or deformation of the portion, which has a relatively large degree of movement or a relatively large deformation amount, may be allowed and the durability of the portion, which has a relatively large degree of movement or a relatively large deformation amount, may be improved by the soft protective material. In the flexible display, the durability of the portion, which has a relatively small degree of movement or a relatively small deformation amount, may be improved by the hard protective material.

According to various embodiments of the present disclosure, the protective structure for the bending portion of the display panel is provided, such that it is possible to provide the electronic device including the flexible display capable of assisting in improving the durability against an external impact.

In addition, various effects that can be directly or indirectly identified through the present document may be provided.

The effects obtained by the present disclosure are not limited to the aforementioned effects, and other effects, which are not mentioned above, will be clearly understood by those skilled in the art from the following description.

### [Brief Description of Drawings]

In connection with the description of the drawings, the same or similar reference numerals may be used for the same or similar components.
FIG. 1A is a front perspective view of an electronic device in an unfolded state (or an flat state) according to an embodiment of the present disclosure.
FIG. 1B is a top plan view illustrating a front surface of the electronic device in the unfolded state according to the embodiment of the present disclosure.
FIG. 1C is a top plan view illustrating a back surface of the electronic device in the unfolded state according to the embodiment of the present disclosure.
FIG. 2A is a perspective view of the electronic device in a folded state (folding state) according to the embodiment of the present disclosure.
FIG. 2B is a perspective view of the electronic device in an intermediate state according to the embodiment of the present disclosure.
FIG. 3 is an exploded perspective view of the electronic device according to the embodiment of the present disclosure.
FIG. 4A is an exploded perspective view of a flexible display according to the embodiment of the present disclosure.
FIG. 4B is a configuration view when the flexible display according to the embodiment of the present disclosure is viewed from the back surface.
FIG. 5 is a stacked view of the flexible display according to the embodiment of the present disclosure.
FIG. 6A is a partially cross-sectional view of the electronic device according to the embodiment of the present disclosure when viewed along line 6a-6a in FIG. 1A.
FIG. 6B is a partially cross-sectional view of the electronic device according to the embodiment of the present disclosure when viewed along line 6b-6b in FIG. 1A.
FIG. 6C is a partially cross-sectional view of the electronic device according to the embodiment of the present disclosure when viewed along line 6c-6c in FIG. 1A.
FIG. 6D is a partially cross-sectional view of the electronic device according to the embodiment of the present disclosure when viewed along line 6d-6d in FIG. 1A.
FIG. 6E is a partially cross-sectional view of the electronic device according to the embodiment of the present disclosure when viewed along line 6d-6d in FIG. 1A and illustrates an embodiment in which an area, which is occupied by a third protective material disposed between a window layer and a display panel, is expanded in comparison with that in FIG. 6D.
FIG. 7A is a cross-sectional view illustrating a state in which a molding part and a protection member are disposed between a bending portion and a lateral member of the flexible display according to the embodiment of the present disclosure.
FIGS. 7B and 7C are schematic views illustrating a process of applying the molding part and the protection member to the flexible display according to the embodiment of the present disclosure.
FIG. 8A is a schematic view illustrating an experimental process of dropping a ball onto a front surface of the flexible display according to the embodiment of the present disclosure.
FIG. 8B is a schematic view illustrating a Charpy impact test on a lateral surface of the flexible display according to the embodiment of the present disclosure.
FIG. 9A is a partially cross-sectional view of the electronic device according to the embodiment of the present disclosure when viewed along line 6d-6d in FIG. 1A, i.e., a cross-sectional view illustrating a state in which the window layer of the flexible display extends toward the bending portion.
FIG. 9B is a cross-sectional view illustrating a state in which the window layer of the flexible display according to the embodiment of the present disclosure extends toward the lateral surface of the flexible display.
FIG. 10 is a view illustrating a process of filling, with a protective material, a lateral surface of a partial layer of the window layer and a lateral surface of a layer disposed below the window layer in an edge area of the flexible display according to the embodiment of the present disclosure.
FIG. 11A is a top plan view of the electronic device in the unfolded state according to various embodiments of the present disclosure.
FIG. 11B is a side view of the electronic device in the folded state according to various embodiments of the present disclosure.
FIG. 12A is a top plan view of the electronic device in a slide-in state according to various embodiments of the present disclosure.
FIG. 12B is a cross-sectional view of the electronic device according to various embodiments of the present disclosure when viewed along line 12b-12b in FIG. 12A.
FIG. 12C is a top plan view of the electronic device in a slide-out state according to various embodiments of the present disclosure.
FIG. 12D is a cross-sectional view of the electronic device according to various embodiments of the present disclosure when viewed along line 12d-12d in FIG. 12C.

### [Mode for the Invention]

It should be appreciated that various embodiments of the present disclosure and the terms used therein are not intended to limit the technological features set forth herein to particular embodiments and include various changes, equivalents, or replacements for a corresponding embodiment.

With regard to the description of the drawings, similar reference numerals may be used to refer to similar or related elements. It is to be understood that a singular form of a noun corresponding to an item may include one or more of the things, unless the relevant context clearly indicates otherwise.

As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

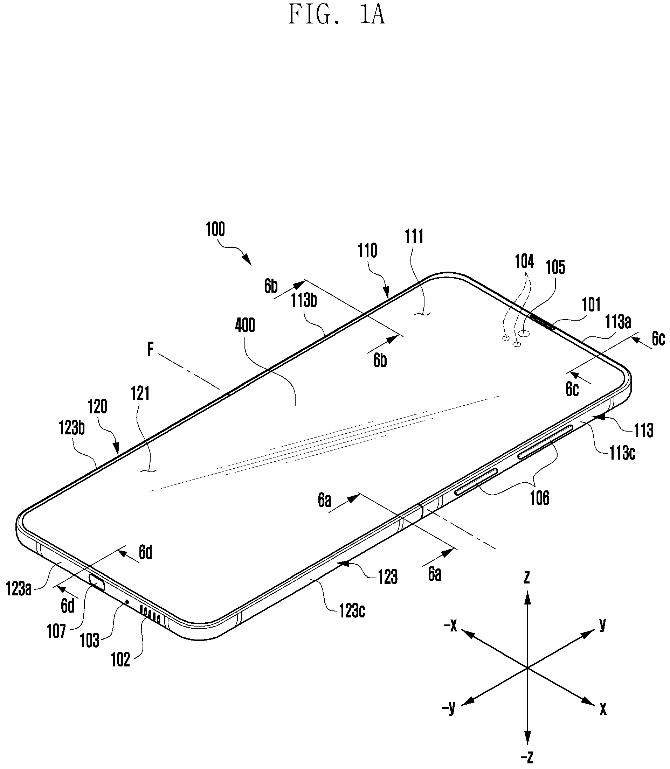

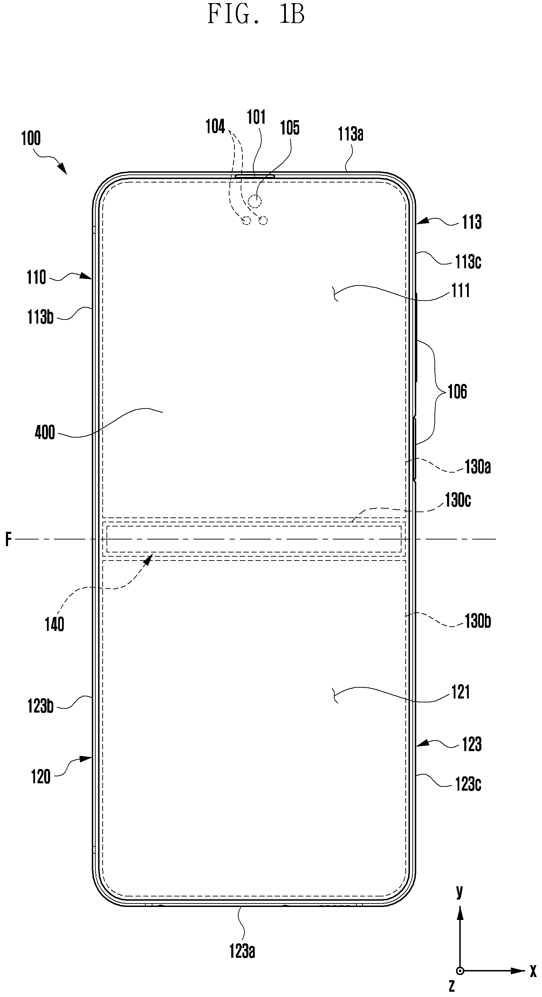

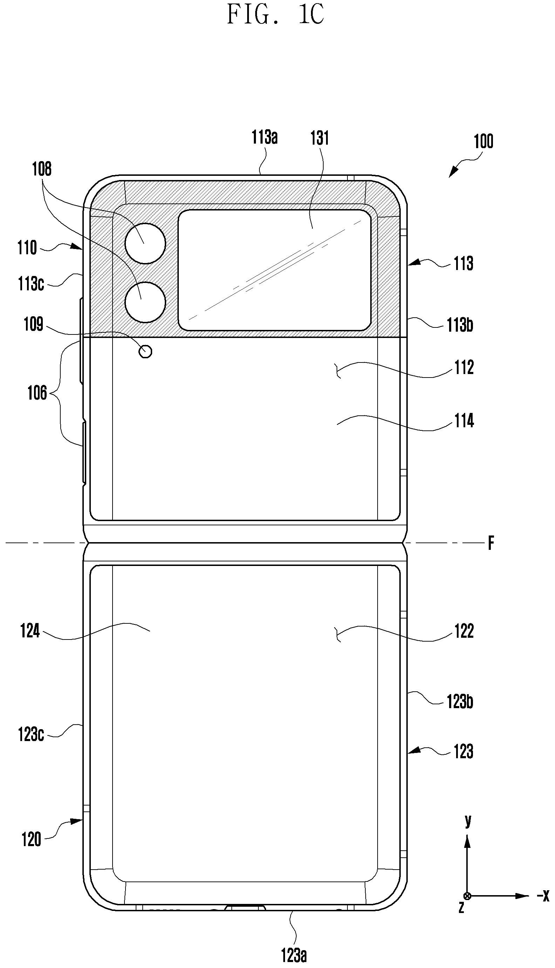

FIG. 1A is a perspective view of an electronic device illustrating an unfolded state (or flat state) of the electronic device according to various embodiments of the disclosure. FIG. 1B is a plan view illustrating a front surface of an electronic device in an unfolded state of the electronic device according to various embodiments of the disclosure. FIG. 1C is a plan view illustrating a rear surface of an electronic device in an unfolded state according to various embodiments of the disclosure.

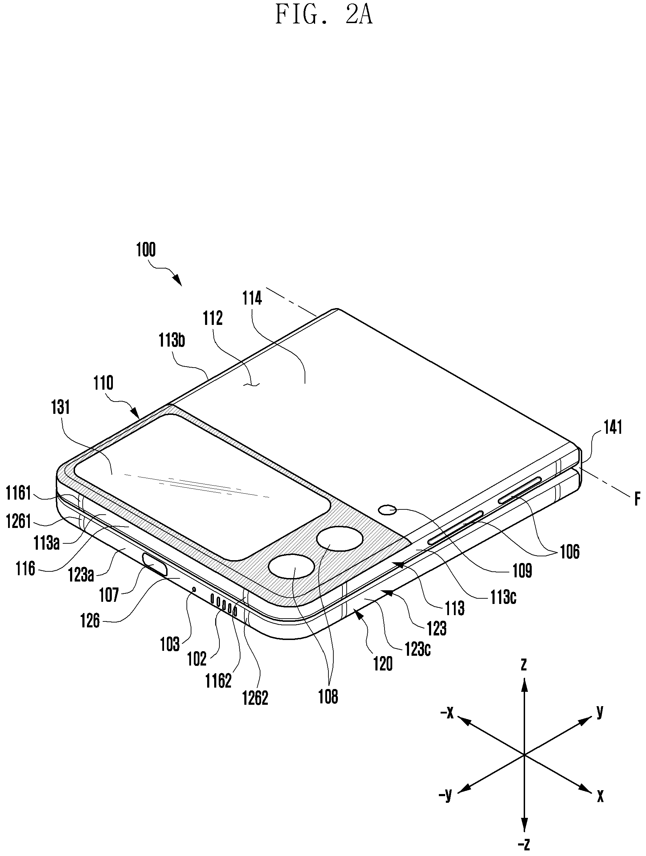

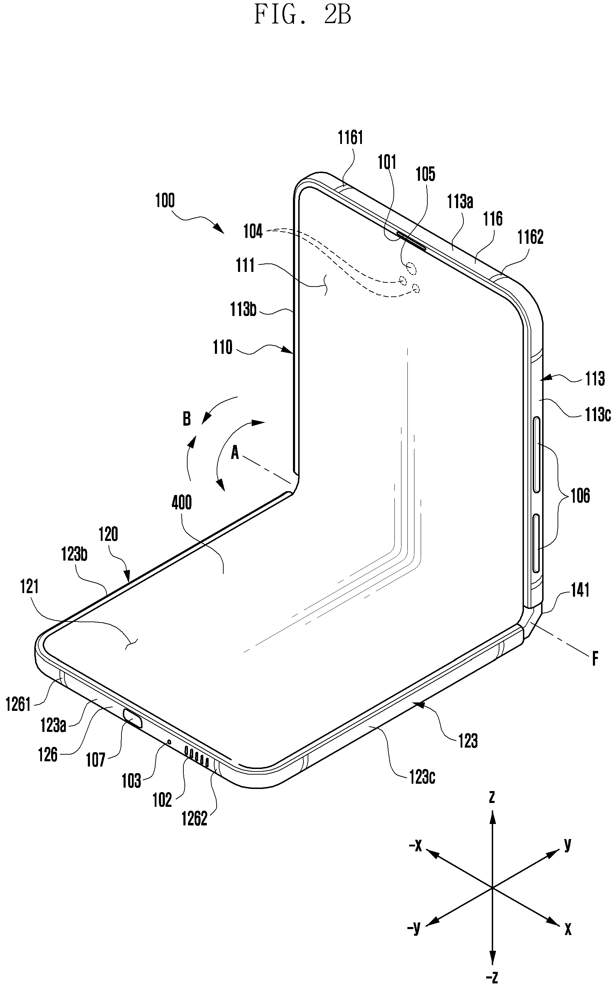

FIG. 2A is a perspective view of an electronic device illustrating a folded state of the electronic device according to various embodiments of the disclosure. FIG. 2B is a perspective view of an electronic device illustrating an intermediate state of the electronic device according to various embodiments of the disclosure.

With reference to FIGS. 1A to 2B, an electronic device 100 may include first and second housings 110 and 120 (e.g., foldable housing structure) combined with each other in a foldable manner based on a hinge device (e.g., hinge device 140 of FIG. 1B). In an embodiment, the hinge device (e.g., hinge device 140 of FIG. 1B) may be disposed in an X-axis direction or in a Y-axis direction. According to an embodiment, the electronic device 100 may include a first display 400 (e.g., flexible display, foldable display, or main display) disposed in an area (e.g., recess) formed by the first and second housings 110 and 120. According to an embodiment, the first housing 110 and the second housing 120 may be disposed on both sides around a folding axis F, and may have a substantially symmetrical shape about the folding axis F. The hinge device 140 may comprise the folding axis F. According to an embodiment, an angle or a distance between the first housing 110 and the second housing 120 may differ depending on the state of the electronic device 100. For example, depending on whether the electronic device is in an unfolded state (or flat state), in a folded state, or in an intermediate state, the angle or the distance between the first housing 110 and the second housing 120 may differ.

According to an embodiment, in the unfolded state of the electronic device 100, the first housing 110 may include a first surface 111 directed in a first direction (e.g., front direction) (z-axis direction), and a second surface 112 directed in a second direction (e.g., rear direction) (-z-axis direction) opposite to the first surface 111. According to an embodiment, in the unfolded state of the electronic device 100, the second housing 120 may include a third surface 121 directed in the first direction (z-axis direction), and a fourth surface 122 directed in the second direction (-z-axis direction). According to an embodiment, in the unfolded state of the electronic device 100, the first surface 111 of the first housing 110 and the third surface 121 of the second housing 120 may be directed in substantially the same first direction (z-axis direction). In an embodiment, in the folded state of the electronic device 100, the first surface 111 of the first housing 110 and the third surface 121 of the second housing 120 may face each other. According to an embodiment, in the unfolded state of the electronic device 100, the second surface 112 of the first housing 110 and the fourth surface 122 of the second housing 120 may be directed in substantially the same second direction (-z-axis direction). In an embodiment, in the folded state of the electronic device 100, the second surface 112 of the first housing and the fourth surface 122 of the second housing 120 may be directed in opposite directions. For example, in the folded state of the electronic device 100, the second surface 112 may be directed in the first direction (z-axis direction), and the fourth surface 122 may be directed in the second direction (-z-axis direction). In this case, the first display 400 may not be viewed from outside (in-folding manner). In an embodiment, the electronic device 100 may be folded so that the second surface 112 of the first housing 110 and the fourth surface 122 of the second housing 120 face each other. In this case, the first display 400 may be disposed to be viewed from the outside (out-folding manner).

According to various embodiments, the first housing 110 (e.g., first housing structure) may include a first lateral member 113 forming the appearance of the electronic device 100, and a first rear cover 114 combined with the first lateral member 113, and forming at least a part of the second surface 112 of the electronic device 100. The first lateral member 113 may form part of an outer surface of the first housing 110. According to an embodiment, the first lateral member 113 may include a first side surface 113a, a second side surface 113b extending from one end of the first side surface 113a, and a third side surface 113c extending from the other end of the first side surface 113a. According to an embodiment, the first lateral member 113 may be formed in a quadrangular (e.g., square or rectangular) shape through the first side surface 113a, the second side surface 113b, and the third side surface 113c.

According to various embodiments, the second housing 120 (e.g., second housing structure) may include a second lateral member 123 forming the appearance of the electronic device 100 at least partly, and a second lateral cover 124 combined with the second lateral member 123, and forming at least a part of the fourth surface 122 of the electronic device 100. The second lateral member 123 may form part of an outer surface of the second housing 120. According to an embodiment, the second lateral member 123 may include a fourth side surface 123a, a fifth side surface 123b extending from one end of the fourth side surface 123a, and a sixth side surface 123c extending from the other end of the fourth side surface 123a. According to an embodiment, the second lateral member 123 may be formed in a quadrangular shape through the fourth side surface 123a, the fifth side surface 123b, and the sixth side surface 123c.

According to various embodiments, the first and second housings 110 and 120 are not limited to the illustrated shapes and combinations, but may be implemented by combinations and/or compositions of other shapes or components. In an embodiment, the first lateral member 113 may be integrally formed with the first rear cover 114, and the second lateral member 123 may be integrally formed with the second rear cover 124.

According to various embodiments, in the unfolded state of the electronic device 100, the second side surface 113b of the first lateral member 113 and the fifth side surface 123b of the second lateral member 123 may be connected to each other without a gap. According to an embodiment, in the unfolded state of the electronic device 100, the third side surface 113c of the first lateral member 113 and the sixth side surface 123c of the second lateral member 123 may be connected to each other without a gap. According to an embodiment, in the unfolded state of the electronic device 100, the sum of the lengths of the second side surface 113b and the fifth side surface 123b may be configured to be longer than the length of the first side surface 113a and/or the fourth side surface 123a. According to an embodiment, in the unfolded state of the electronic device 100, the sum of the lengths of the third side surface 113c and the sixth side surface 123c may be configured to be longer than the length of the first side surface 113a and/or the fourth side surface 123a.

With reference to FIGS. 2A and 2B, the first lateral member 113 and/or the second lateral member 123 may be formed of metal, or may further include polymer that is injected into metal. According to an embodiment, the first lateral member 113 and/or the second lateral member 123 may include at least one conductive part 116 and/or 126 electrically segmented through at least one segment part 1161, 1162 and/or 1261, 1262 formed of polymer. In this case, the at least one conductive part 116 and/or 126 may be electrically connected to a wireless communication circuit included in the electronic device 100, and thus may be used as at least a part of an antenna that operates in at least one designated band (e.g., legacy band).

According to various embodiments, the first rear cover 114 and/or the second rear cover 124 may be formed of, for example, at least one of coated or colored glass, ceramic, polymer, or metal (e.g., aluminum, stainless steel (STS), or magnesium) or a combination of at least two thereof.

According to various embodiments, the first display 400 may be disposed to extend from the first surface 111 of the first housing 110 to at least a part of the third surface 121 of the second housing 120 across the hinge device (e.g., hinge device 140 of FIG. 1B). In an embodiment, the first display 400 may include a first area 130a substantially corresponding to the first surface 111, a second area 130b corresponding to the second surface 121, and a third area 130c (e.g., flexible area or folding area) connecting the first area 130a and the second area 130b to each other. According to an embodiment, the third area 130c may be a part of the first area 120a and/or the second area 130b, and may be disposed at a location corresponding to the hinge device (e.g., hinge device 140 of FIG. 1B). According to an embodiment, the electronic device 100 may include a hinge housing 141 (e.g., hinge cover) supporting the hinge device (e.g., hinge device 140 of FIG. 1B). In an embodiment, the hinge housing 141 may be disposed to be exposed to outside when the electronic device 100 is in a folded state, and not to be viewed from the outside as being drawn into an inner space of the first housing 110 and an inner space of the second housing 120 when the electronic device 100 is in an unfolded state.

According to various embodiments, the electronic device 100 may include a second display 131 (e.g., sub-display) disposed separately from the first display 400. According to an embodiment, the second display 131 may be disposed to be exposed at least partly on the second surface 112 of the first housing 110. In an embodiment, when the electronic device 100 is in the folded state, the second display 131 may display at least a part of state information of the electronic device 100 in replacement of at least a part of a display function of the first display 400. According to an embodiment, the second display 131 may be disposed to be viewed from the outside through at least a partial area of the first rear cover 114. In an embodiment, the second display 131 may be disposed on the fourth surface 122 of the second housing 120. In this case, the second display 131 may be disposed to be viewed from the outside through at least a partial area of the second rear cover 124.

According to various embodiments, the electronic device 100 may include at least one of an input device 103 (e.g., microphone), sound output devices 101 and 102, a sensor module 104, camera devices 105 and 108, a key input device 106, or a connector port 107. In an illustrated embodiment, although the input device 103 (e.g., microphone), the sound output devices 101 and 102, the sensor module 104, the camera devices 105 and 108, the key input device 106, or the connector port 107 are illustrated as hole or circular shaped elements formed on the first housing 110 or the second housing 120, they are exemplarily illustrated for explanation, but are not limited thereto. According to various embodiments, the input device 103 may include at least one microphone 103 disposed on the second housing 120. In an embodiment, the input device 103 may include a plurality of microphones 103 disposed to sense the sound direction. In an embodiment, the plurality of microphone 103 may be disposed at proper locations on the first housing 110 and/or the second housing 120. According to an embodiment, the sound output devices 101 and 102 may include at least one speaker 101 and 102. According to an embodiment, the at least one speaker 101 and 102 may include a receiver 101 for call disposed on the first housing 110, and the speaker 102 disposed on the second housing 120. In an embodiment, the input device 103, the sound output devices 101 and 102, and the connector port 107 may be disposed in a space provided in the first housing 110 and/or the second housing 120 of the electronic device 100, and may be exposed to an external environment through at least one hole formed on the first housing 110 and/or the second housing 120. According to an embodiment, the at least one connector port 107 may be used to transmit and receive power and/or data to and from an external electronic device. In an embodiment, the at least one connector port (e.g., ear jack hole) may accommodate a connector (e.g., ear jack) for transmitting and receiving an audio signal to and from the external electronic device. In an embodiment, the hole formed on the first housing 110 and/or the second housing 120 may be commonly used for the input device 103 and the sound output devices 101 and 102. In an embodiment, the sound output devices 101 and 102 may include a speaker (e.g., piezo-electric speaker) that is not exposed through the hole formed on the first housing 110 and/or the second housing 120.

According to various embodiments, the sensor module 104 may generate an electrical signal or a data value corresponding to an internal operation state of the electronic device 100 or an external environment state. According to an embodiment, the sensor module 104 may detect the external environment through the first surface 111 of the first housing 110. In an embodiment, the electronic device 100 may further include at least one sensor module disposed to detect the external environment through the second surface 112 of the first housing 110. According to an embodiment, the sensor module 104 (e.g., illumination sensor) may be disposed to detect the external environment through the first display 400 under the first display 400. According to an embodiment, the sensor module 104 may include at least one of a gesture sensor, a gyro sensor, a barometric pressure sensor, a magnetic sensor, an acceleration sensor, a grip sensor, a color sensor, an infrared (IR) sensor, a biosensor, a temperature sensor, a humidity sensor, an illumination sensor, a proximity sensor, a biosensor, an ultrasonic sensor, or an illumination sensor 104.

According to various embodiments, the camera devices 105 and 108 may include the first camera device 105 (e.g., front camera device) disposed on the first surface 111 of the first housing 110, and the second camera device 108 disposed on the second surface 112 of the first housing 110. In an embodiment, the electronic device 100 may further include a flash 109 disposed near the second camera device 108. According to an embodiment, the camera devices 105 and 108 may include at least one lens, an image sensor, and/or an image signal processor. According to an embodiment, the camera devices 105 and 108 may be disposed so that two or more lenses (e.g., wide angle lens, ultra wide angle lens, or telephoto lens) and two or more image sensors are located on one surface (e.g., first surface 111, second surface 112, third surface 121, or fourth surface 122) of the electronic device 100. In an embodiment, the camera devices 105 and 108 may include lenses for time of flight (TOF) and/or image sensors.

According to various embodiments, the key input device 106 (e.g., key buttons) may be disposed on the third side surface 113c of the first lateral member 113 of the first housing 110. In an embodiment, the key input device 106 may be disposed on at least one side surface of other side surfaces 113a and 113b of the first housing 110 and/or side surfaces 123a, 123b, and 123c of the second housing 120. In an embodiment, the electronic device 100 may not include some or all of the key input devices 106, and the non-included key input device 106 may be implemented in another form, such as a soft key, on the first display 400. In an embodiment, the key input device 106 may be implemented by using the pressure sensor included in the first display 400.

According to various embodiments, one of the camera devices 105 and 108 (e.g., first camera device 105) or the sensor module 104 may be disposed to be exposed through the first display 400. According to an embodiment, the first camera device 105 or the sensor module 104 may be optically exposed to the outside through an opening (e.g., through-hole) formed at least partly on the first display 400 in the inner space of the electronic device 100. According to an embodiment, at least a part of the sensor module 104 may be disposed not to be visually exposed through the first display 400 in the inner space of the electronic device 100. With reference to FIG. 2B, the electronic device 100 may operate to maintain at least one designated folding angle in an intermediate state through the hinge device (e.g., hinge device 140 of FIG. 1B). In this case, the electronic device 100 may control the first display 400 so that different kinds of content are displayed on the display area corresponding to the first surface 111 and the display area corresponding to the third surface 121. According to an embodiment, the electronic device 100 may operate in substantially the unfolded state (e.g., unfolded state of FIG. 1A) and/or in substantially the folded state (e.g., folded state of FIG. 2A) based on a specific folding angle (e.g., angle between the first housing 110 and the second housing 120 when the electronic device 100 is in the intermediate state) through the hinge device (e.g., hinge device 140 of FIG. 1B). In an embodiment, if a pressing force is provided in an unfolding direction (direction A) in a state where the electronic device 100 is unfolded at the specific folding angle through the hinge device (e.g., hinge device 140 of FIG. 1B), the electronic device 100 may operate to be transitioned to the unfolded state (e.g., unfolded state of FIG. 1A). In an embodiment, if the pressing force is provided in a folding direction (direction B) in a state where the electronic device 100 is unfolded at the specific folding angle through the hinge device (e.g., hinge device 140 of FIG. 1B), the electronic device 100 may operate to be transitioned to the folded state (e.g., folded state of FIG. 2A). In an embodiment, the electronic device 100 may operate to maintain the unfolded state (not illustrated) at various angles through the hinge device (e.g., hinge device 140 of FIG. 1B) (free-stop function).

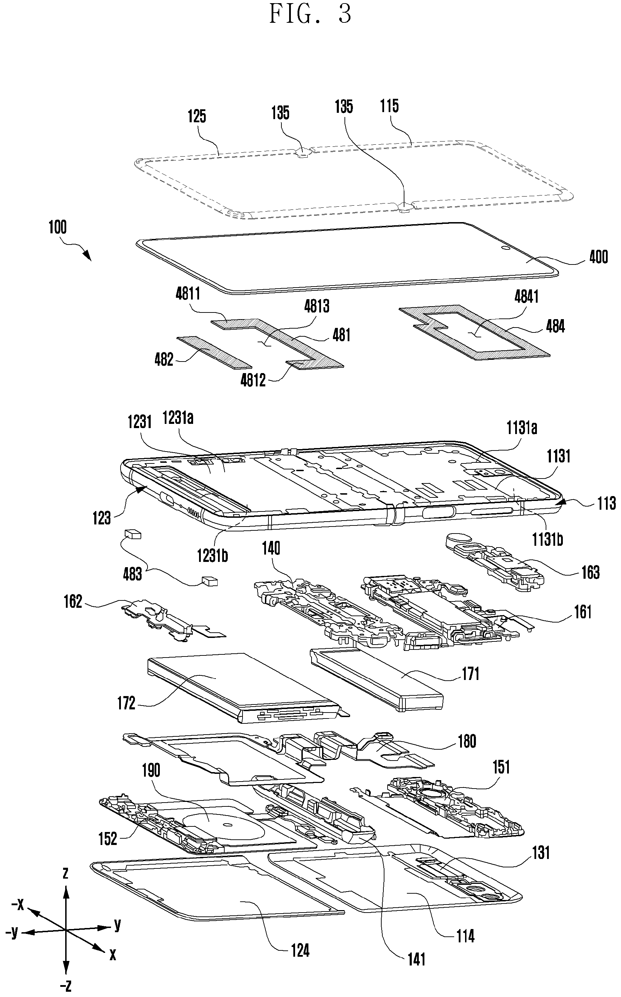

FIG. 3 is an exploded perspective view of an electronic device according to various embodiments of the disclosure.

With reference to FIG. 3, the electronic device 100 may include the first lateral member 113 (e.g., first lateral frame), the second lateral member 123 (e.g., second lateral frame), and the hinge device 140 (e.g., hinge module or hinge structure) rotatably connecting the first lateral member 113 and the second lateral member 123 to each other. According to an embodiment, the electronic device 100 may include a first support member 1131 (e.g., first support plate) extending at least partly from the first lateral member 113, and a second support member 1231 (e.g., second support plate) extending at least partly from the second lateral member 123. According to an embodiment, the first support member 1131 may be integrally formed with the first lateral member 113, or may be structurally combined with the first lateral member 113. In an embodiment, the second support member 1231 may be integrally formed with the second lateral member 123, or may be structurally combined with the second lateral member 123. According to an embodiment, the first display 400 may be disposed to be supported by the first support member 1131 and the second support member 1231. According to an embodiment, the electronic device 100 may include the first rear cover 114 combined with the first lateral member 113, and providing a first space together with the first support member 1131, and the second rear cover 124 combined with the second lateral member 123 and providing a second space together with the second support member 1231. In an embodiment, the first lateral member 113 and the first rear cover 114 may be integrally formed with each other. In an embodiment, the second lateral member 123 and the second rear cover 124 may be integrally formed. According to an embodiment, the first housing 110 may include the first lateral member 113, the first support member 1131, and the first rear cover 114. According to an embodiment, the second housing 120 may include the second lateral member 123, the second support member 1231, and the second rear cover 124. According to an embodiment, the electronic device 100 may include the second display 131 disposed to be viewed from the outside through at least a partial area of the first rear cover 114.

According to various embodiments, the electronic device 100 may include a first board 161 (e.g., first board assembly or main printed circuit board) disposed in the first space between the first lateral member 113 and the first rear cover 114, a camera assembly 163, a first battery 171, or a first bracket 151. According to an embodiment, the camera assembly 163 may include a plurality of camera devices (e.g., camera devices 105 and 108 of FIGS. 1A and 2A), and may be electrically connected to the first board 161. According to an embodiment, the first bracket 151 may provide a support structure for supporting the first board 161 and/or the camera assembly 163 and improved stiffness. According to an embodiment, the electronic device 100 may include a second board 162 (e.g., second board assembly or sub-printed circuit board) disposed in the second space between the second lateral member 123 and the second rear cover 124, an antenna 190 (e.g., coil member), a second battery 172, or a second bracket 152. According to an embodiment, the electronic device 100 may include a plurality of electronic components (e.g., wiring member 180 (e.g., flexible printed circuit board (FPCB)) disposed to extend up to the second board 162, the second battery 172, or the antenna 190, and providing an electrical connection) disposed between the second lateral member 123 and the second rear cover 124 across the hinge device 140 from the first board 161. According to an embodiment, the antenna 190 may include a near field communication (NFC) antenna, a wireless charging antenna, and/or a magnetic secure transmission (MST) antenna.

According to various embodiments, the electronic device 100 may also include a first protection cover 115 (e.g., first protection frame or first decoration member) combined along an edge of the first housing 110, and a second protection cover 125 (e.g., second protection frame or second decoration member) combined along an edge of the second housing 120. According to an embodiment, the first protection cover 115 and/or the second protection cover 125 may be formed of a metal or polymer material. According to an embodiment, the first protection cover 115 and/or the second protection cover 125 may be used as the decoration members. In this case, the first display 400 may be disposed so that the edge of the first area 130a is not viewed from the outside between the first housing 110 and the first protection cover 115. According to an embodiment, the first display 400 may be disposed so that the edge of the second area 130b is not viewed from the outside between the second housing 120 and the second protection cover 125.

According to various embodiments, the electronic device 100 may also include a protection cap 135 disposed to protect the edge of the third area (e.g., third area 130c of FIG. 1B) of the first display 400. In this case, the edge of the first display 400 can be protected through the protection cap 135 disposed at a location corresponding to the folding area (e.g., folding area 130c of FIG. 1B).

According to various embodiments, the first support member 1131 may include a first support surface 1131a directed in the first direction (z-axis direction), and a second support surface 1131b directed in the second direction (-z-axis direction) that is opposite to the first direction. According to an embodiment, the second support member 1231 may include a third support surface 1231a directed in the first direction and a fourth support surface 1231b directed in the second direction in the unfolded state of the electronic device 100. According to an embodiment, the first display 400 may be disposed to be supported by the first support surface 1131a of the first support member 1131 and the third support surface 1231a of the second support member 1231.

According to various embodiments, the electronic device 100 may include at least one waterproof member 481, 482, 483, and 484 disposed between the first display 400 and the second support member 1231 and between the first display 400 and the first support member 1131. According to an embodiment, some waterproof members 481, 482, and 483 of the at least one waterproof member 481, 482, 483, and 484 may include the first waterproof member 481 disposed between the first display 400 and the second support member 1231, the second waterproof member 482 connected to the first waterproof member 481, and the third waterproof member 483 that provides a first waterproof space 4813 by connecting one end 4811 of the first waterproof member 481 to one end of the second waterproof member 482 and by connecting the other end 4812 of the first waterproof member 481 to the other end of the second waterproof member 482. In an embodiment, the first waterproof member 481, the second waterproof member 482, and/or the third waterproof member 483 may be integrally formed. According to an embodiment, the waterproof member 484 of the at least one waterproof member 481, 482, 483, and 484 may include the fourth waterproof member 484 that provides a second waterproof space 4841 in the shape of a closed loop disposed between the first display 400 and the first support member 1131. According to an embodiment, a plurality of electronic elements including a control circuit (e.g., display driver IC (DDI)) of the first display 400 are disposed in the first sealed waterproof space 4813 formed through the first waterproof member 481, the second waterproof member 482, and the third waterproof member 483 between the first display 400 and the second support member 1231, and thus can be protected from external moisture and/or foreign substances. According to an embodiment, at least one electronic component (e.g., sensor module (e.g., sensor module 104 of FIG. 1A) and/or camera device (e.g., camera device 105 of FIG. 1A)) disposed through the first support member 1131 is disposed in a second waterproof space 4841 formed by the closed loop shape of the fourth waterproof member 484 between the first display 400 and the first support member 1131, and thus can be protected from the external moisture and/or foreign substances. The kinds of the constituent elements disposed in the first waterproof space 4813 and/or the second waterproof space 4841 according to various embodiments are not limited.

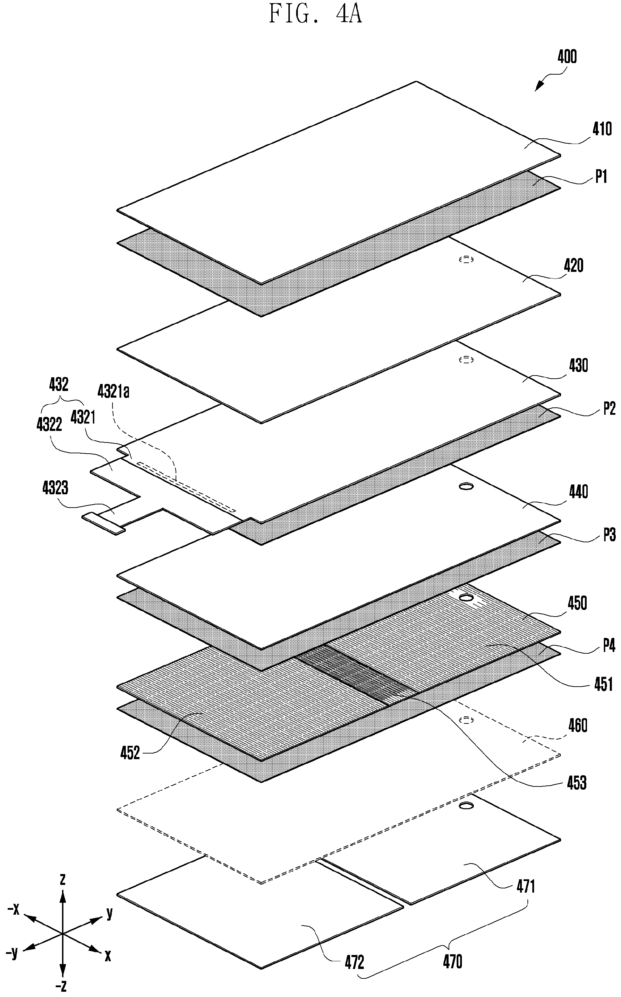

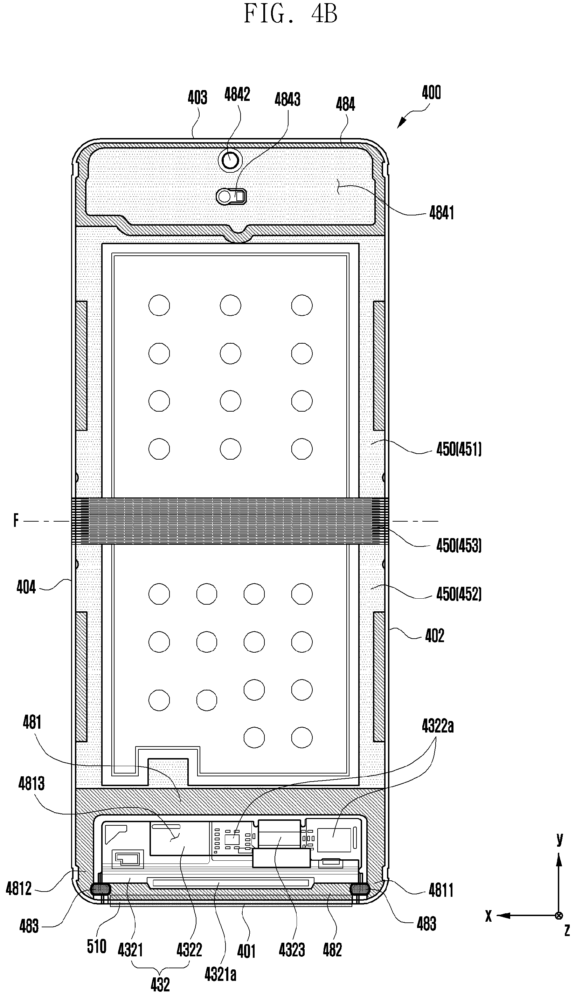

FIG. 4A is an exploded perspective view of a flexible display according to various embodiments of the present disclosure. FIG. 4B is a configuration view when the flexible display according to various embodiments of the present disclosure is viewed from a back surface.

A flexible display 400 in FIGS. 4A and 4B may be at least partially similar to a first display 400 in FIG. 1A and further include other embodiments of the flexible display.

The display (e.g., the flexible display 400) according to the exemplary embodiments of the present disclosure may include an unbreakable (UB) type OLED display (e.g., a curved display). However, the present disclosure is not limited thereto. The flexible display 400 may include a flat type display that is an OCTA (on-cell-touch active matrix organic light-emitting diode (AMOLED)) type display.

With reference to FIGS. 4A and 4B, the flexible display 400 may include a window layer 410 and include a polarizing layer (POL (polarizer)) 420 (e.g., a polarizing film), a display panel 430, a polymer layer 440, a support plate 450, and a reinforcement plate 470 sequentially disposed on a back surface (e.g., a -z-axis direction) of the window layer 410. In any embodiment, the flexible display 400 may also include a digitizer 460 disposed between the support plate 450 and the reinforcement plate 470. In any embodiment, the digitizer 460 may be disposed between the polymer layer 440 and the support plate 450. For example, in case that the flexible display 400 is a POL-less display, the polarizing layer may be excluded, and a transparent reinforcement layer (e.g., a buffer layer) may be further disposed at a position of the polarizing layer. In any embodiment, the reinforcement plate 470 may be excluded.

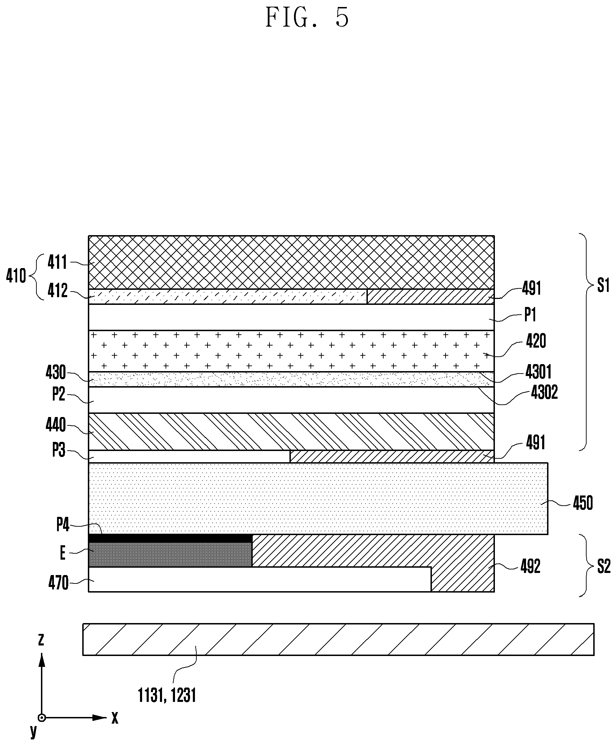

According to the embodiment, the window layer 410 may include a first layer (e.g., a first layer 411 in FIG. 5) and a second layer (e.g., a second layer 412 in FIG. 5) stacked sequentially. In the embodiment, the first layer 411 may be made of polymer (e.g., polyethylene terephthalate (PET), polyimide (PI), or thermoplastic polyurethane (TPU)). In the embodiment, the second layer 412 may be made of glass. According to one embodiment, the second layer may include ultra-thin glass (UTG). In any embodiment, the flexible display 400 may be formed as a part of the window layer 410 and further include a coating layer disposed on an upper portion of the first layer 411. In this case, the coating layer may include a hard coating layer (HC layer), an antireflection (AR)/low-reflection (LR) coating layer, a shatter-proof (SP) coating layer, an anti-fingerprint (AF) coating layer, or the like. In any embodiment, the coating layer may be formed between the first layer 411 and the second layer 412, formed on a lateral surface of the first layer 411, or formed on at least one of a back or lateral surface of the second layer 412.

According to the embodiment, the window layer 410, the polarizing layer 420, the display panel 430, the polymer layer 440, and the support plate 450 may be disposed to traverse at least a part of a first surface (e.g., a first surface 111 in FIG. 1A) of a first housing (e.g., a first housing 110 in FIG. 1A) and at least a part of a third surface (e.g., a third surface 121 in FIG. 1A) of a second housing (e.g., a second housing 120 in FIG. 1A). In the embodiment, the reinforcement plate 470 may include a first reinforcement plate 471 corresponding to the first housing (e.g., the first housing 110 in FIG. 1A), and a second reinforcement plate 472 corresponding to the second housing (e.g., the second housing 120 in FIG. 1A). In the embodiment, the reinforcement plate 470 may be used as the ground for providing rigidity for the flexible display 400 and preventing an erroneous operation of the flexible display 400. In the embodiment, the reinforcement plate 470 may be made of a metallic material. In the embodiment, the reinforcement plate 470 may be made of SUS or Al. In the embodiment, the window layer 410, the polarizing layer 420, the display panel 430, the polymer layer 440, the support plate 450, and reinforcement plates 471 and 472 may be attached to one another by means of bonding members P1, P2, P3, and P4 (or adhesive agents). For example, the bonding members P1, P2, P3, and P4 may each include at least one of an optical clear adhesive (OCA), a pressure sensitive adhesive (PSA), a thermally reactive bonding agent, a general bonding agent, and a double-sided tape. In the embodiment, the reinforcement plate 470 may be attached to a first support member 1131 and/or a second support member 1231 by means of a bonding member P5.

According to the embodiment, the display panel 430 may include a plurality of pixels and a wiring structure (e.g., an electrode pattern). In the embodiment, the polarizing layer 420 may selectively transmit light that is generated from a light source of the display panel 430 and vibrates in a predetermined direction. In the embodiment, the display panel 430 and the polarizing layer 420 may be integrated. In the embodiment, the flexible display 400 may also include a touch panel (not illustrated).

According to the embodiment, the polymer layer 440 may be disposed below the display panel 430 to provide a dark background for ensuring the visibility of the display panel 430, and the polymer layer 440 may be made of a buffer material for ensuring a buffer operation. In any embodiment, in order to ensure the waterproofness of the flexible display 400, the polymer layer 440 may be removed or disposed below the support plate 450. In any embodiment, the polymer layer 440 may be excluded in case that the support plate 450 is made of an opaque material.

According to the embodiment, the support plate 450 may provide bending properties to the flexible display 400. For example, the support plate 450 may be made of a nonmetallic thin-plate-shapes material such as fiber reinforced plastic (FRP) (e.g., carbon fiber reinforced plastic (CFRP) or glass fiber reinforced plastic (GFRP)) having rigid properties for supporting the display panel 430. In the embodiment, the support plate 450 may include a first portion 451 corresponding to the first housing (e.g., the first housing 110 in FIG. 1A), a second portion 452 corresponding to the second housing (e.g., the second housing 120 in FIG. 1A), and a third portion 453 (a flexible portion or a bending portion) configured to connect the first portion 451 and the second portion 452. In the embodiment, in order to improve flexibility, the third portion 453 may include a plurality of openings formed through the support plate 450 from a top surface to a back surface, and/or a plurality of recesses formed in a part of the top surface and/or a part of the back surface. In the embodiment, the bending properties of the third portion 453 may be determined on the basis of at least one of sizes, shapes, and arrangement densities of at least some of the plurality of openings and/or at least some of the plurality of recesses. In any embodiment, the support plate 450 may be made of a metallic material such as steel use stainless (SUS) (e.g., stainless steel (STS)), Cu, Al, or metal CLAD (e.g., a stack member in which SUS and Al are alternately disposed). In this case, the plurality of openings may be formed in an overall area of the support plate 450 so that a detection operation of the digitizer 460 disposed below the support plate 450 is induced. In the embodiment, the support plate 450 may assist in reinforcing the rigidity of the electronic device (e.g., the electronic device 100 in FIG. 1A), block surrounding noise, and disperse heat discharged from peripheral heat-radiating components.

According to the embodiment, the display 400 may also include the digitizer 460 as a detection member disposed below the support plate 450 and configured to receive an input of an electronic pen (e.g., a stylus). In the embodiment, the digitizer 460 may include coil members disposed on a dielectric substrate (e.g., a dielectric film or a dielectric sheet) to detect an electromagnetic induction resonant frequency applied from the electronic pen. In any embodiment, the digitizer 460 may include a first digitizer disposed in an area corresponding to the first housing (e.g., the first housing 110 in FIG. 1A), and a second digitizer electrically connected to the first digitizer and disposed in an area corresponding to the second housing (e.g., the second housing 120 in FIG. 1A).

According to the embodiments, the flexible display 400 may include at least one functional member (not illustrated) disposed between the polymer layer 440 and the support plate 450 or disposed below the support plate 450. In the embodiment, the functional members may include a graphite sheet for heat dissipation, a force touch FPCB, a fingerprint sensor FPCB, a communication antenna radiator, or a conductive/non-conductive tape. In the embodiment, in case that the functional member cannot be bent, the functional members may be independently disposed on the first housing (e.g., the first housing 110 in FIG. 1A) and the second housing (e.g., the second housing 120 in FIG. 1A). In the embodiment, in case that the functional member may be bent, the functional member may be disposed from the first housing (e.g., the first housing 110 in FIG. 1A) to at least a part of the second housing (e.g., the second housing 120 in FIG. 1A) through the hinge device (e.g., the hinge device 140 in FIG. 3).

According to the embodiment, as illustrated in FIG. 4B, the flexible display 400 may be formed in a quadrangular shape. In the embodiment, the flexible display 400 may include a first edge area 401, a second edge area 402 extending from the first edge area 401 in a perpendicular direction, a third edge area 403 extending from the second edge area 402 in a direction parallel to the first edge area 401, and a fourth edge area 404 extending from the third edge area 403 to the first edge area 401. In the embodiment, the first edge area 401 and the third edge area 403 may be areas in which the layers of the flexible display 400 to be described below may slip. In the embodiment, the second edge area 402 and the fourth edge area 404 may be areas in which no slip occurs. In the embodiment, the first edge area 401 may be disposed at a position corresponding to a fourth lateral surface (e.g., the fourth lateral surface 123a in FIG. 1A) of the second housing (e.g., the second housing 120 in FIG. 1A). In the embodiment, the second edge area 402 may be disposed at a position corresponding to a second lateral surface (e.g., the second lateral surface 113b in FIG. 1A) of the first housing (e.g., the first housing 110 in FIG. 1A) and a fifth lateral surface (e.g., the fifth lateral surface 123b in FIG. 1A) of the second housing (e.g., the second housing 120 in FIG. 1A). In the embodiment, the third edge area 403 may be disposed at a position corresponding to a first lateral surface (e.g., the first lateral surface 113a in FIG. 1A) of the first housing (e.g., the first housing 110 in FIG. 1A). According to one embodiment, the fourth edge area 404 may be disposed at a position corresponding to a third lateral surface (e.g., the third lateral surface 113c in FIG. 1A) of the first housing (e.g., the first housing 110 in FIG. 1A) and a sixth lateral surface (e.g., the sixth lateral surface 123c in FIG. 1A) of the second housing (e.g., the second housing 120 in FIG. 1A).

According to the embodiment, in the first edge area 401, the flexible display 400 may include a bending portion 432 disposed to be folded from the display panel 430 to at least a partial area of the rear surface (e.g., the -z-axis direction) of the flexible display 400. In the embodiment, the bending portion 432 may include an extension portion 4321 extending from the display panel 430 and including a control circuit 4321a, and a flexible substrate 4322 electrically connected to the extension portion 4321 and including a plurality of electric elements. In the embodiment, the control circuit 4321a may include a display driver IC (DDI) or a touch display driver IC (TDDI) mounted on the extension portion 4321 having the electrical wiring structure. In the embodiment, the bending portion 432 may include a chip-on-panel or chip-on-plastic (COP) structure in which the control circuit 4321a is disposed directly on the extension portion 4321. In any embodiment, the bending portion 432 may include a chip-on-film (COF) structure in which the control circuit 4321a is mounted on a separate connection film (not illustrated) configured to connect the extension portion 4321 and the flexible substrate 4322. In the embodiment, the flexible display 400 may include a plurality of electronic elements (e.g., electronic elements 4322a in FIG. 4B) disposed on the flexible substrate 4322. In the embodiment, the flexible display 400 may include an FPCB connection part 4323 (e.g., a connector part) extending from the flexible substrate 4322 and electrically connected to the substrate (e.g., the second substrate 162 in FIG. 3) of the electronic device (e.g., the electronic device 100 in FIG. 3). In the embodiment, the plurality of electric elements may include passive elements such as a touch IC, a display flash memory, an ESD prevention diode, a pressure sensor, a fingerprint sensor, or a decap. As another embodiment, in case that the bending portion 432 is disposed in an area facing the first housing (e.g., the first housing 110 in FIG. 1A) of the flexible display 400, the FPCB connection part 4323 may be electrically connected to another substrate (e.g., the first substrate 161 in FIG. 3) of the electronic device (e.g., the electronic device 100 in FIG. 3).

According to the embodiment, the electronic device (e.g., the electronic device 100 in FIG. 3) may include one or more waterproof members 481, 482, 483, and 484. In the embodiment, the one or more waterproof members 481, 482, and 483 may include first, second, and third waterproof members 481, 482, and 483 corresponding to at least a part of the second housing (e.g., the second housing 120 in FIG. 1A) and disposed to define a first waterproof space 4813 for protecting the control circuit 4321a, which is substantially disposed on the extension portion 4321 of the bending portion 432, and the plurality of electronic elements 4322a, which is disposed on the flexible substrate 4322, from external moisture and/or foreign substances. In the embodiment, at least one waterproof member may include a fourth waterproof member 484 disposed to correspond to at least a part of the second housing. In the embodiment, the fourth waterproof member 484 may provide a sealed second waterproof space 4841. In the embodiment, the electronic device (e.g., the electronic device 100 in FIG. 1A) may include at least one electronic component disposed in first and second arrangement areas 4842 and 4843 provided in at least a partial area of the second waterproof space 4841. In the embodiment, at least one electronic component may include a camera device (e.g., the camera device 105 in FIG. 1A) disposed in the first arrangement area 4842, and a sensor module (e.g., the sensor module 104 in FIG. 1A) disposed in the second arrangement area 4843.

FIG. 5 is a stacked view of the flexible display according to the embodiment of the present disclosure.

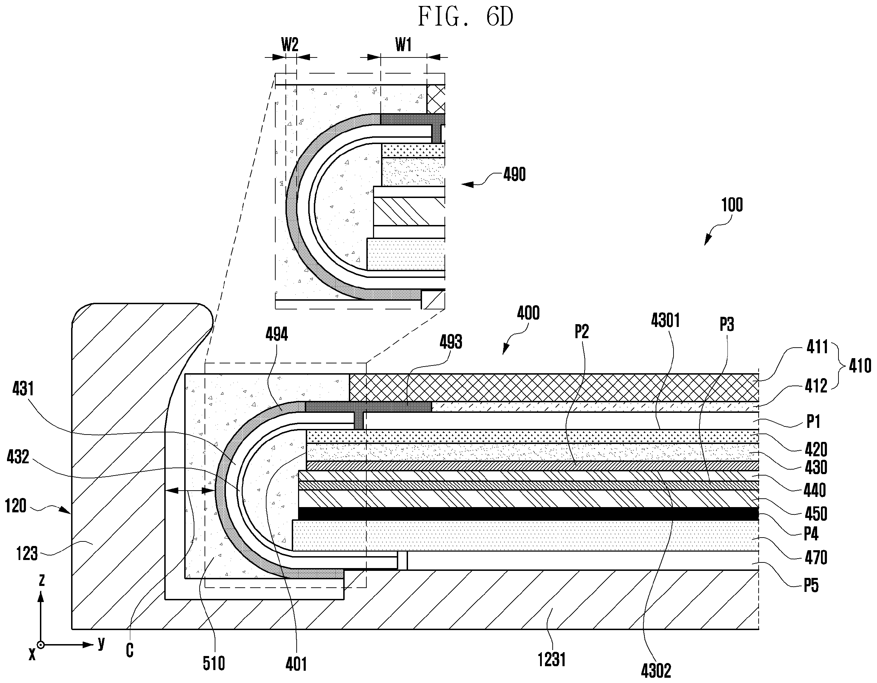

According to the embodiment, as illustrated in FIG. 5, the electronic device 100 may include the first housing (e.g., the first housing 110 in FIG. 1A), the second housing 120 coupled to the first housing 110 so as to be foldable by means of the hinge device (e.g., the hinge device 140 in FIG. 3), and the flexible display 400 disposed to be supported by the first housing 110 and the second housing 120. In the embodiment, the flexible display 400 may include the display panel 430 and include the POL 420, the window layer 410, the first layer 411, and the second layer 412 sequentially stacked on a top surface 4301 (e.g., a first surface) of the display panel 430 (e.g., the top surface 4301 of the display panel 430 in FIG. 6D). The flexible display 400 may include the polymer layer 440, the support plate 450, and the reinforcement plate 470 sequentially stacked on a back surface 4302 (e.g., a second surface) of the display panel 430 (e.g., the back surface 4302 of the display panel 430 in FIG. 6D). In the embodiment, the window layer 410, the polarizing layer 420, the display panel 430, the polymer layer 440, the support plate 450, and the reinforcement plate 470 may be attached to one another by means of the bonding members P1, P2, P3, and P4 (or the adhesive agents). In the embodiment, the support plate 450 may be attached, by means of the bonding members, to the reinforcement plate (e.g., the reinforcement plate 470 in FIG. 4A) disposed between the support plate 450 and the housings 110 and 120. In the embodiment, the reinforcement plate 470 may be attached to the first support member 1131 and/or the second support member 1231 by means of the bonding member (e.g., the bonding member P5). In the embodiment, the window layer 410 may include the first layer 411 (e.g., a PET layer or a TPU layer) made of polymer, and the second layer 412 (e.g., a UTG layer) disposed below the first layer 411 and made of glass. In the embodiment, the polarizing layer 420 may be excluded.

In the embodiment that is not illustrated in the drawings, the digitizer 460 may be disposed between the support plate 450 and the reinforcement plate 470 or substituted for the reinforcement plate 470 and disposed below the support plate 450.

According to the embodiment, at least a part of the flexible display 400 may be disposed in the first housing 110 and supported by a first lateral member 113 and the first support member 1131 extending from the first lateral member 113 to the internal space. In the embodiment, the flexible display 400 may be disposed in the second housing 120 and supported by a second lateral member 123 and the second support member 1231 extending from the second lateral member 123 to the internal space. In the embodiment, the flexible display 400 may include the bending portion 432 (e.g., a COP or a COF) disposed in the first edge area 401, which corresponds to the fourth lateral surface (e.g., the fourth lateral surface 123a in FIG. 1A) of the second housing 120, extending from the display panel 430, and bent toward the back surface of the flexible display 400. In the embodiment, the bending portion 432 may be protected by a protective layer 431. In the embodiment, the flexible display 400 may be disposed so as not to overlap the first lateral member 113 and/or the second lateral member 123 when the flexible display 400 is viewed from above. In the embodiment, the bending portion 432 may be disposed so as not to overlap the second lateral member 123 when the flexible display 400 is viewed from above.

In the embodiment, the layers (e.g., the window layer 410, the POL 420, the display panel 430, the polymer layer 440, the support plate 450, the digitizer 460, and/or the reinforcement plate 470), which constitute the flexible display 400, may slip (e.g., slide) when the electronic device 100 is folded or unfolded (e.g., the folding operation). In the embodiment, the slip may be the sliding motions of the layers, which constitute the flexible display 400, relative to the other layers as the flexible display 400 is folded while corresponding to the folding operation of the electronic device 100. In the embodiment, when the electronic device 100 is folded, the amount of occurrence of the slip (e.g., the amount of rectilinear movement) may increase as the layer of the flexible display 400 becomes adjacent to an outermost peripheral layer (e.g., a layer positioned in a +Z direction based on FIG. 4A). For example, during the folding operation of the electronic device 100, the window layer 410, which is positioned as the outermost peripheral layer of the flexible display 400, may have a larger degree of movement (or a larger amount of slip movement or a larger degree of slip movement) in a direction (e.g., the Y axial direction in FIG. 4A) perpendicular to a folding axis F than the POL 420, the display panel 430, the polymer layer 440, the support plate 450, and/or the digitizer 460 positioned below the window layer 410.

According to the embodiment, when the electronic device 100 is folded, the support plate 450 of the flexible display 400 may have a relatively smaller amount of occurrence of a slip than the other layer (e.g., the window layer or the display panel 430). In the embodiment, with reference to FIG. 5, based on the support plate 450, the flexible display 400 may be divided into a first layer S1 having a relatively large amount of occurrence of a slip, and a second layer S2 having a smaller amount of occurrence of a slip than the first layer S1. In the embodiment, the first layer S1 may be positioned above the support plate 450 (e.g., in the +Z direction based on FIG. 4A). The second layer S2 may be positioned below the support plate 450 (e.g., in the -Z direction based on FIG. 4A). In the embodiment, the first layer S1 may include the window layer 410, the POL 420, the display panel 430, and/or the polymer layer 440 positioned above the support plate 450. In the embodiment, the second layer S2 may include the digitizer 460, a buffer member E, and/or the reinforcement plate 470 positioned below the support plate 450. In the embodiment, the first layer S1 may include the window layer 410, and the second layer S2 may include the display panel 430. For convenience of description, the following description will be described on the premise that the first layer S1 includes the layer positioned above the support plate 450, and the second layer S2 includes the layer positioned below the support plate 450.

In the embodiment, the electronic device 100 may exclude the protective cover (e.g., the decorative cover or the protective frame) disposed such that the edge areas (e.g., the edges) 401, 402, 403, and 404 of the flexible display 400 are invisible from the outside. For example, in the electronic device 100 from which the protective cover is excluded, the flexible display 400 may be supported by the first housing 110 and the second housing 120 and disposed such that the edges are visible from the outside. In this case, the edge areas 401, 402, 403, and 404 of the flexible display 400 may be vulnerable to external foreign substances or an external impact. Protective materials (e.g., coating layers) for protecting the flexible display 400 from external foreign substances or an external impact may be disposed in the edge areas 401, 402, 403, and 404 of the flexible display 400. In the embodiment, in case that hard protective materials are disposed in the edge areas 401, 402, 403, and 404 of the flexible display 400, the slip between the layers between the flexible display 400, which occurs during the folding operation of the electronic device 100, may be hindered, which may cause buckling, torsion, misalignment of the flexible display 400 and degrade the surface quality. In the embodiment, in case that soft protective materials are disposed in the edge areas 401, 402, 403, and 404 of the flexible display 400, the durability may decrease in comparison with the case in which the hard protective materials are disposed in the edge areas 401, 402, 403, and 404 of the flexible display 400. According to the embodiment of the present disclosure, in consideration of a degree of movement for each portion of the flexible display 400, the soft protective material (e.g., a first protective material 491) and the hard protective material (e.g., a second protective material 492) may be disposed in the edge areas 401, 402, 403, and 404. For example, the first protective material 491 may be disposed on a lateral surface of a first display portion (e.g., any one of the edge areas 401, 402, 403, and 404 or a portion facing the lateral members 113 and 123) having a relatively large degree of movement or a relatively large deformation amount, and the second protective material 492, which is harder than the first protective material 491, may be disposed on a lateral surface of the second display portion (e.g., any one of the edge areas 401, 402, 403, and 404 or a portion facing the lateral members 113 and 123) having a relatively small degree of movement or a relatively small deformation amount. Therefore, the motion of the portion of the flexible display 400, which has a large degree of movement or a large deformation amount, is allowed by the first protective material 491, and the durability of the portion of the flexible display 400, which has a small degree of movement or a small deformation amount, may be improved by the second protective material 492.

According to the embodiment, the flexible display 400 may be divided depending on the degree of movement. In the embodiment, the flexible display 400 may be divided into the first display portion having a first degree of movement, and the second display portion having a second degree of movement smaller than the first degree of movement. In the embodiment, the first display portion may be the first layer S1 having a relatively large amount of occurrence of a slip and/or a relatively large deformation amount, and the second display portion may be the second layer S2 having a relatively small amount of occurrence of a slip and/or a relatively small deformation amount. As described below, in the embodiment, the first display portion may be a folding portion 130c (e.g., a third area 130c) that is folded or unfolded in accordance with the rotational operations of the first housing 110 and the second housing 120. The second display portion may be a first planar portion 130a (e.g., a first area 130a) and a second planar portion 130b (e.g., a second area 130b) that are kept planar during the rotational operations of the first housing 110 and the second housing 120. As described below, in the embodiment, the first display portion (e.g., the first layer S1 in FIG. 5) may be a portion having a relatively large amount of occurrence of a slip (or a relatively large degree of slip movement) among the layers of the flexible display 400, and the second display portion (e.g., the second layer S2 in FIG. 5) may be a portion having a relatively small amount of occurrence of a slip among the layers of the flexible display 400. As described below, in the embodiment, the first display portion may be an area having the first degree of movement in the back surface area of the flexible display 400 that faces the support members (e.g., the first support member 1131 and the second support member 1231). The second display portion may be an area, which has the second degree of movement larger than the first degree of movement, in the back surface area of the flexible display 400. The above-mentioned example may be a single embodiment or configured by a combination of embodiments.

The first display portion and the second display portion are merely distinguished for convenience of description and may not be physically separated on the flexible display 400.

According to the embodiment, the protective material (e.g., the first protective material 491 and the second protective material 492) may be disposed in the edge areas 401, 402, 403, and 404 of the flexible display 400 to protect the lateral surfaces (e.g., the first edge area 401, the second edge area 402, the third edge area 403, and/or the fourth edge area 404) of the flexible display 400 from an external impact and foreign substances. In the embodiment, the edge areas 401, 402, 403, and 404 may be edges of the layers (e.g., the window layer 410, the POL 420, the display panel 430, the polymer layer 440, the support plate 450, the digitizer 460, and/or the reinforcement plate 470) of the flexible display 400. In the embodiment, the protective materials 491 and 492 may be positioned between the edge areas 401, 402, 403, and 404 of the flexible display 400, the housings 110 and 120, and/or the lateral members 113 and 123.

In the embodiment, the protective materials 491 and 492 may have different properties depending on the degree of movement of the flexible display 400, and the protective materials 491 and 492 may be disposed in the edge areas 401, 402, 403, and 404 of the flexible display 400. In the embodiment, the first protective material 491, which is disposed to cover at least a part of the lateral surface of the first display portion, and the second protective material 492, which is disposed to cover at least a part of the lateral surface of the second display portion, may have different properties. In the embodiment, the lateral surface of the first display portion (e.g., any one of the edge areas 401, 402, 403, and 404 or the portion facing the lateral members 113 and 123) and the lateral surface of the second display portion (e.g., any one of the edge areas 401, 402, 403, and 404 or the portion facing the lateral members 113 and 123) may be portions where the first display portion and the second display portion respectively face the lateral members 113 and 123. In the embodiment, the first protective material 491 may be relatively softer than the second protective material 492 in order to accommodate the motion of the first display portion. The second protective material 492 may be relatively harder than the first protective material 491 in order to ensure the durability of the lateral surface of the second display portion. In the embodiment, the first protective material 491 may have a first modulus. The second protective material 492 may have a second modulus higher than the first protective material 491. In the embodiment, the 'modulus' may be a Young's modulus. The modulus may represent the ratio of stress over strain in a material when the material undergoes linear elastic deformation. The first modulus may represent the ratio of stress over strain in the first protective material 491 when the first protective material 491 undergoes linear elastic deformation. The second modulus may represent the ratio of stress over strain in the second protective material 492 when the second protective material 492 undergoes linear elastic deformation. In the embodiment, the deformation caused by an external impact may relatively decrease as the modulus increases. In addition, the protective material may become relatively hard as the modulus increases. The second protective material 492 having a higher modulus (e.g., the second modulus) than the first protective material 491 may be harder than the first protective material 491. Alternatively, the first protective material 491 may be softer than the second protective material 492. In the embodiment, the hardness of the protective materials (e.g., the first protective material 491, the second protective material 492, a third protective material 493, a fourth protective material 494, a fifth protective material, and a sixth protective material) may be proportional to the modulus. In the embodiment, the second protective material 492 may have a second hardness higher than a first hardness of the first protective material 491. In the embodiment, the surface strength increases as the hardness of the protective materials 491, 492, 493, and 494 increases. Therefore, the durability against an external impact may increase as the hardness increases.

In the embodiment, with reference to FIG. 5, the protective materials (e.g., the first protective material 491 and the second protective material 492) may have different properties depending on the amount of occurrence of a slip for each of the layers constituting the flexible display 400, and the protective materials 491 and 492 may be disposed in the edge areas 401, 402, 403, and 404 of the flexible display 400. In the embodiment, the first protective material 491 may be disposed on the lateral surface of the first layer S1 (e.g., the first display portion) having a relatively large amount of occurrence of a slip. The second protective material 492 may be disposed on the lateral surface of the second layer S2 (e.g., the second display portion) having a smaller amount of occurrence of a slip than the first layer S1. The first protective material 491 and the second protective material 492 may accommodate a slip between the layers of the flexible display 400, which is generated by the operation of folding or unfolding the electronic device 100 (e.g., the folding operation), such that the occurrence of a defect such as buckling caused by a slip may be reduced, which may assist in improving the surface quality of the flexible display 400. In addition, the first protective material 491 and the second protective material 492 may protect the edge areas 401, 402, 403, and 404 of the flexible display 400 from an external impact and foreign substances.

In the embodiment, in order to simplify the process, the edge areas 401, 402, 403, and 404 of the flexible display 400 may be filled only with the first protective material 491 having soft properties.

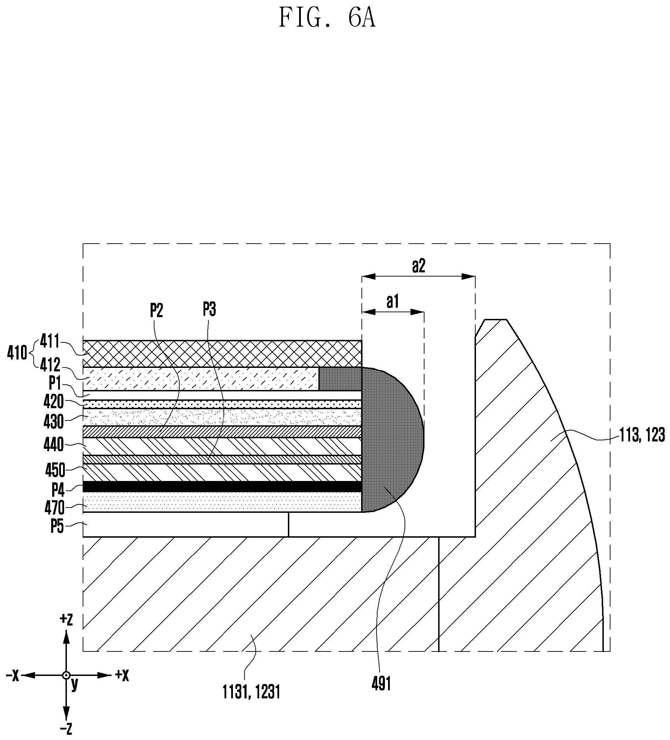

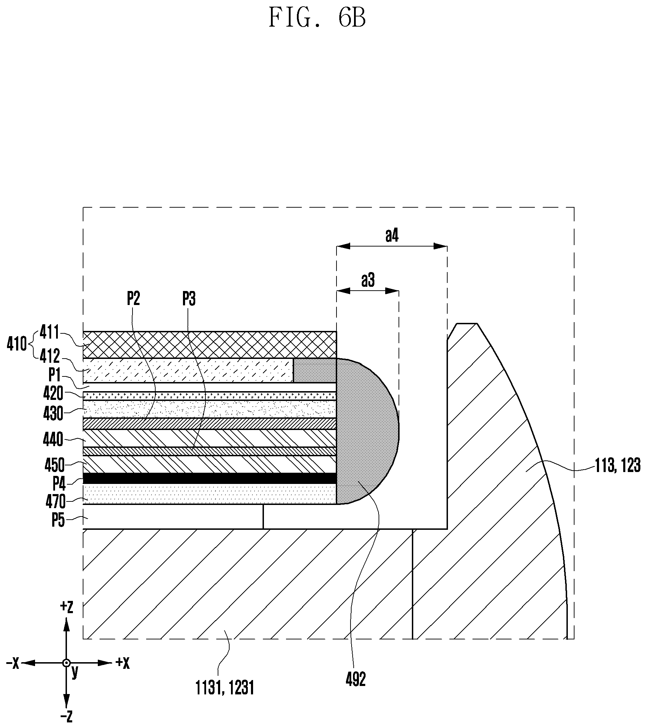

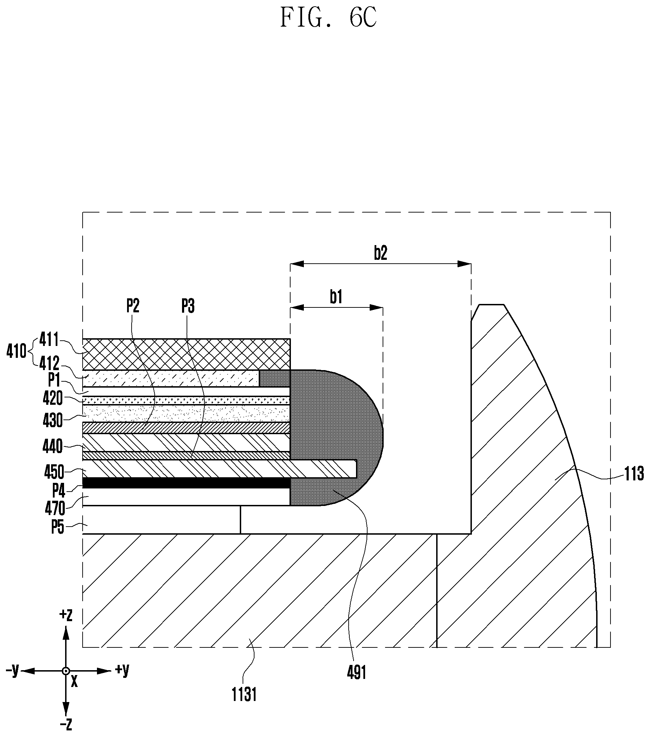

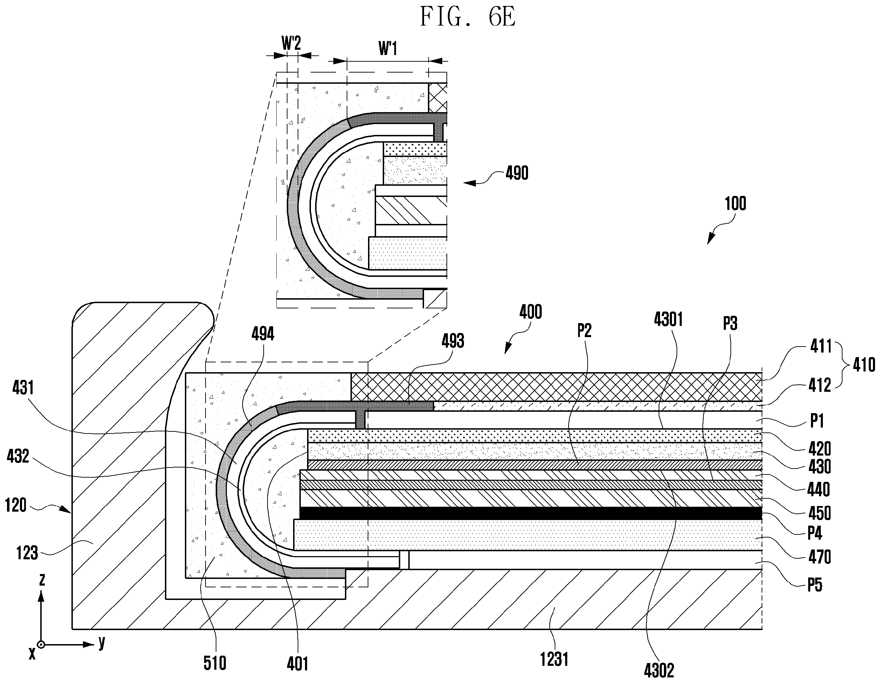

FIG. 6A is a partially cross-sectional view of the electronic device 100 according to the embodiment of the present disclosure when viewed along line 6a-6a in FIG. 1A. FIG. 6B is a partially cross-sectional view of the electronic device 100 according to the embodiment of the present disclosure when viewed along line 6b-6b in FIG. 1A. FIG. 6C is a partially cross-sectional view of the electronic device 100 according to the embodiment of the present disclosure when viewed along line 6c-6c in FIG. 1A. FIG. 6D is a partially cross-sectional view of the electronic device 100 according to the embodiment of the present disclosure when viewed along line 6d-6d in FIG. 1A. FIG. 6E is a partially cross-sectional view of the electronic device 100 according to the embodiment of the present disclosure when viewed along line 6d-6d in FIG. 1A and illustrates an embodiment in which an area, which is occupied by the third protective material 493 disposed between the window layer 410 and the display panel 430, is expanded in comparison with that in FIG. 6D.

According to the embodiment, as illustrated in FIGS. 6A and 6B, the flexible display 400 may include the first planar portion 130a, the second planar portion 130b, and the folding portion 130c configured to be folded by the folding operation of the electronic device 100 while connecting the first planar portion 130a and the second planar portion 130b that are not deformed by the folding operation of the electronic device 100. In the embodiment, the protective materials may have different properties depending on the degree of movement of the flexible display 400, and the protective materials may be disposed in the edge areas 401, 402, 403, and 404 of the flexible display 400. In the embodiment, with reference to FIG. 6A, the soft first protective material 491 may be disposed on the lateral surface of the folding portion 130c that performs the motion to a larger degree than the planar portions 130a and 130b. In the embodiment, with reference to FIG. 6B, the hard second protective material 492 may be disposed on the lateral surface of the first planar portion 130a and the lateral surface of the second planar portion 130b that perform the motions to a smaller degree than the folding portion 130c. Because the first protective material 491 is relatively softer than the second protective material 492, the first protective material 491 may protect the lateral surface of the folding portion 130c from an external impact and foreign substances without hindering the folding operation of the flexible display 400. In addition, the second protective material 492 may protect the lateral surface of the first planar portion 130a and the lateral surface of the second planar portion 130b from an external impact and foreign substances. Because the second protective material 492 is relatively harder than the first protective material 491, the second protective material 492 may protect the lateral surface of the first planar portion 130a and the lateral surface of the second planar portion 130b with higher strength than the lateral surface of the folding portion 130c.

According to the embodiment, as illustrated in FIGS. 6A and 6B, the edges of the layers (e.g., the window layer 410, the POL 420, the display panel 430, the polymer layer 440, the support plate 450, the digitizer 460, and/or the reinforcement plate 470) of the flexible display 400 may be aligned with one another when the flexible display 400 is viewed perpendicularly (e.g., viewed in the -Z direction based on FIG. 6A). Each of the layers of the flexible display 400 may have a structure made by integrally cutting at least one of the edge areas 401, 402, 403, and 404. For example, in the second edge area 402 and the fourth edge area 404 in no slip occurs, the layers at the edge of the flexible display 400 may be aligned with one another when the flexible display 400 is viewed perpendicularly.

According to the embodiment, as illustrated in FIG. 6C, the protective material may be disposed in the third edge area 403 of the flexible display 400. In the embodiment, with reference to FIG. 6C, the first protective material 491 may be disposed in the third edge area 403 of the flexible display 400. In the embodiment, the second protective material 492 may be disposed in the third edge area 403 of the flexible display 400. In the embodiment, as illustrated in FIG. 5, in the third edge area 403 of the flexible display 400, the first protective material 491 may be disposed on the lateral surface of the first layer S1 positioned above the support plate 450, and the second protective material 492 may be disposed on the lateral surface of the second layer S2 positioned below the support plate 450.

In the embodiment, in the third edge area 403, the layers may not be aligned with one another when the flexible display 400 is viewed in the perpendicular direction. For example, with reference to FIG. 6C, the edge of the support plate 450 may further protrude than edges of other layers (e.g., the window layer 410 and the display panel 430). Therefore, when an external impact is applied to one surface (e.g., the first lateral surface 113a) of each of the lateral members 113 and 123 facing the third edge area 403, it is possible to mitigate an impact applied to other layers of the flexible display 400 when the edge of the support plate 450 collides with other layers of the flexible display 400.

According to the embodiment, as shown in Table 1, the first protective material 491 and the second protective material 492 may have physical properties below.

**[Table 1]**

| | First protective material 491 | Second protective material 492 |
|---|---|---|
| Viscosity (CPS) | about 250 to about 400 | about 200 to about 400 |
| Modulus (MPa) | about 3 to about 8 | about 1,400 to about 2,400 |
| Elongation ratio (%) | about 300 | about 6 to 9 |

In the embodiment, the first protective material 491 and the second protective material 492 may be made of an acrylic urethane material. In the embodiment, the first protective material 491 and the second protective material 492 may be cured by at least one of natural curing, thermal curing, and ultraviolet curing. In the embodiment, the second edge area 402 and the fourth edge area 404 of the flexible display 400 may be closer to the lateral members 113 and 123 than the first edge area 401 and the third edge area 403 in which a slip occurs. In the embodiment, the first edge area 401 and the third edge area 403 may be spaced apart from the lateral members 113 and 123 at predetermined intervals to accommodate a slip between the layers of the flexible display 400. In the embodiment, with reference to FIGS. 6A, 6B, and 6C, in the second edge area 402 and the fourth edge area 404, a shortest distance (a2-a1) between the lateral members 113 and 123 and the first protective material 491 positioned on the lateral surface of the folding portion 130c may be equal to or longer than a shortest distance (a4-a3) between the lateral members 113 and 123 and the second protective material 492 positioned on the lateral surfaces of the planar portions 130a and 130b (e.g., any one of the edge areas 401, 402, 403, and 404 or the portion facing the lateral members 113 and 123) in the second edge area 402 and the fourth edge area 404. In the embodiment, the shortest distance (a2-a1) between the lateral members 113 and 123 and the first protective material 491 positioned on the lateral surface of the folding portion 130c (e.g., any one of the edge areas 401, 402, 403, and 404 or the portion facing the lateral members 113 and 123) may be shorter than the shortest distance (a4-a3) between the lateral members 113 and 123 and the second protective material 492 positioned on the lateral surface of the planar portions 130a and 130b. In the embodiment, a shortest distance (b2-b1) between the lateral members 113 and 123 and the protective material (e.g., the first protective material 491) positioned in the third edge area 403 may be longer than the shortest distance (a2-a1) between the lateral members 113 and 123 and the first protective material 491 positioned on the lateral surface of the folding portion 130c and the shortest distance (a4-a3) between the lateral members 113 and 123 and the second protective material 492 positioned on the lateral surfaces of the planar portions 130a and 130b. In the embodiment, a shortest distance (c) between the lateral members 113 and 123 and the fourth protective material 494 positioned on the bending portion 432 in the first edge area 401 to be described below may be longer than the shortest distance (a2-a1) between the lateral members 113 and 123 and the first protective material 491 positioned on the lateral surface of the folding portion 130c and the shortest distance (a4-a3) between the lateral members 113 and 123 and the second protective material 492 positioned on the lateral surfaces of the planar portions 130a and 130b. An interval between the second and fourth edge areas 402 and 404 and the lateral members 113 and 123 may be smaller than an interval between the first edge area 401 and the lateral members 113 and 123 and an interval between the third edge area 403 and the lateral members 113 and 123. According to the embodiment, as illustrated in FIG. 6D, the third protective material 493 and the fourth protective material 494 may be disposed in the first edge area 401 of the flexible display 400. In the embodiment, the third protective material 493 may be disposed between the window layer 410 and the display panel 430. In the embodiment, the fourth protective material 494 may be positioned to cover at least a part of the bending portion 432 of the flexible display 430. The durability of the bending portion 432 against an external impact may be ensured by the fourth protective material 494. In the embodiment, the third protective material 493 may have a third modulus, and the fourth protective material 494 may have a fourth modulus higher than the third modulus. The third modulus may represent the ratio of stress over strain in the third protective material 493 when the third protective material undergoes linear elastic deformation. The fourth modulus may represent the ratio of stress over strain in the fourth protective material 494 when the fourth protective material undergoes linear elastic deformation. In the embodiment, the third protective material 493 may include the first protective material 491. In the embodiment, the fourth protective material 494 may include the second protective material 492.

According to the embodiment, in case that the space between the window layer 410 and the display panel 430 is filled with the fourth protective material 494, a natural slip between the layers of the flexible display 400 caused by the folding operation is suppressed, and buckling occurs on the flexible display 400, which may degrade the surface quality of the flexible display 400. In particular, in case that the window layer 410, which has a longer slip distance than other layers, is physically connected to the space in the display panel 430 through the second protective material 492, buckling may occur on the flexible display 400. Therefore, according to the exemplary embodiment of the present disclosure, as illustrated in FIG. 6D, the space between the window layer 410 and the display panel 430 (e.g., including the space including the POL 420) may be filled with the third protective material 493. Because the third protective material 493 accommodates a slip between the layers of the flexible display 400 generated by the folding and unfolding operations of the electronic device 100, the third protective material 493 may reduce the occurrence of a defect such as buckling, which may improve the surface quality of the flexible display 400.

According to the embodiment, as shown in Table 2, the third protective material 493 and the fourth protective material 494 may have physical properties below.

**[Table 2]**

| | Third protective material 493 | Fourth protective material 494 |
|---|---|---|
| Viscosity (CPS) | about 2,500 | about 3,000 |
| Modulus (MPa) | about 2.85 | about 106.49 |
| Elongation ratio (%) | about 300 | - |

In the embodiment, the third protective material 493 and the fourth protective material 494 may be made of an acrylic urethane material. In the embodiment, the third protective material 493 and the fourth protective material 494 may be cured by at least one of natural curing, thermal curing, and ultraviolet curing. In the embodiment, when the fourth protective material 494 is disposed and cured in the bending portion 432 before the space between the window layer 410 and the display panel 430 is filled with the third protective material 493, the space between the window layer 410 and the display panel 430 may be filled with the fourth protective material 494. In this case, the fourth protective material 494 may hinder a slip of the window layer 410. Therefore, the fourth protective material 494 may be disposed and cured in the bending portion 432 after the space between the window layer 410 and the display panel 430 is filled with the third protective material 493 and the third protective material 493 is cured. According to the embodiment, as illustrated in FIGS. 6D and 6E, an area in which the third protective material 493 occupies the space between the window layer 410 and the display panel 430 may vary depending on the amount of occurrence of a slip of the window layer 410. In addition, a thickness by which the bending portion 432 is coated with the fourth protective material 494 may vary depending on the necessary durability of the bending portion 432. For example, an interval W1 of the third protective material 493 between the edge of the window layer 410 and the edge of the fourth protective material 494 in FIG. 6D may be smaller than an interval W'1 of the third protective material 493 between the edge of the window layer 410 and the edge of the fourth protective material 494 in FIG. 6E. In addition, a thickness W2 of the fourth protective material 494 applied onto the bending portion 432 in FIG. 6D may be larger than a thickness W'2 of the fourth protective material 494 applied onto the bending portion 432 in FIG. 6E. In summary, the interval W1 of the third protective material 493 between the edge of the window layer 410 and the edge of the fourth protective material 494 and the thickness W2 of the fourth protective material 494 may be predetermined examples in consideration of the durability of the bending portion 432 rather than the amount of occurrence of a slip of the window layer 410 in FIG. 6D. For example, the interval W1 of the third protective material 493 between the edge of the window layer 410 and the edge of the fourth protective material 494 may be about 230 um, and the thickness W2 of the fourth protective material 494 may be about 200 um. In FIG. 6E, the interval W'1 of the third protective material 493 between the edge of the window layer 410 and the edge of the fourth protective material 494 and the thickness W'2 of the fourth protective material 494 may be predetermined examples in consideration of the amount of occurrence of a slip of the window layer 410 rather than the durability of the bending portion 432. For example, the interval W'1 of the third protective material 493 between the edge of the window layer 410 and the edge of the fourth protective material 494 may be about 460 um, and the thickness W'2 of the fourth protective material 494 may be about 110 um.

According to the embodiment, the flexible display 400 may be supported by the first support member 1131, which extends from the first lateral member 113, and the second support member 1231 extending from the second lateral member 123. In the embodiment, the protective materials (e.g., the fifth protective material and the sixth protective material) may be disposed between the flexible display 400 and the support members (e.g., the first support member 1131 and the second support member 1231). In the embodiment, the space between the flexible display 400 and the support members 1131 and 1231 may be filled with the protective materials. In the embodiment, the first display portion may be the area having the first degree of movement in the back surface area of the flexible display 400 that faces the support members (e.g., the first support member 1131 and the second support member 1231). The second display portion may be an area, which has the second degree of movement smaller than the first degree of movement, in the back surface area of the flexible display 400. For example, the first display portion may be the folding portion 130c of the flexible display 400, and the second display portion may be the planar portions 130a and 130b.

In the embodiment, the fifth protective material having a fifth modulus may be disposed between the first display portion and the support members 1131 and 1231. The fifth modulus may represent the ratio of stress over strain in the fifth protective material when the fifth protective material undergoes linear elastic deformation. The sixth protective material having a sixth modulus higher than the fifth modulus may be disposed between the second display portion and the support members 1131 and 1231. The sixth modulus may represent the ratio of stress over strain in the sixth protective material when the sixth protective material undergoes linear elastic deformation. In the embodiment, the fifth protective material may be identical to the first protective material 491 or the third protective material 493. The sixth protective material may be identical to the second protective material 492 or the fourth protective material 494. In the embodiment, because the first display portion has a relatively larger degree of movement than the second display portion, the fifth protective materials disposed on the first display portion may be disposed more sparsely or at larger intervals than the sixth protective materials disposed on the second display portion. On the contrary, because the second display portion has a relatively smaller degree of movement than the first display portion, the sixth protective materials disposed on the second display portion may be disposed more densely or at smaller intervals than the fifth protective materials disposed on the first display portion. Therefore, the fifth protective material and the sixth protective material may improve the durability of the flexible display 400 against an external impact applied to the electronic device 100 and accommodate the motion of the flexible display 400 relative to the support members 1131 and 1231.

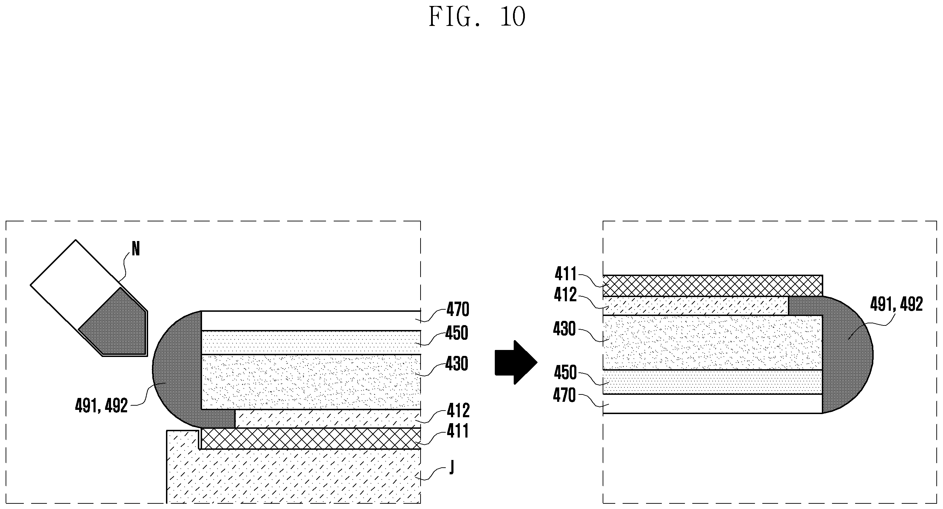

According to the embodiment, during the folding operation of the electronic device 100, the window layer 410 positioned on the outermost peripheral layer of the flexible display 400 may have a larger degree of movement (or a larger amount of slip movement) in the direction (e.g., the Y axial direction in FIG. 4A) perpendicular to the folding axis F than the POL 420, the display panel 430, the polymer layer 440, the support plate 450, the digitizer 460, and/or the reinforcement plate 470 positioned below the window layer 410. In the embodiment, the protective materials (e.g., the first protective material 491, the second protective material 492, the third protective material 493, the fourth protective material 494, the fifth protective material, and/or the sixth protective material) may accommodate a slip between the layers constituting the flexible display 400 but may cause resistance at a predetermined level against the slip. Therefore, it may be ideal that no protective material is disposed on the lateral surface of the window layer 410 having a large amount of occurrence of a slip. In particular, the first edge area 401 and the third edge area 403 of the flexible display 400 may be areas in which a slip occurs in accordance with the folding operation of the electronic device 100. In the embodiment, with reference to FIG. 10 to be described below, in the first edge area 401 and/or the third edge area 403, the protective material (e.g., the first protective material 491) may not be applied onto the lateral surface of the window layer 410 (e.g., the first layer 411). In the embodiment, in the entire edge area (e.g., the first edge area 401, the second edge area 402, the third edge area 403, and the fourth edge area 404) of the flexible display 400, the protective material may not be applied onto the lateral surface of the window layer 410 (e.g., the first layer 411). Because the protective material of the flexible display 400 does not hinder the slip of the window layer 410, it is possible to prevent buckling that occurs when the slip is hindered during the folding operation of the electronic device 100. In addition, in the flexible display 400, the protective materials are applied onto the lateral surfaces of the layers positioned below the window layer 410, which may improve the durability against an external impact. However, the above-mentioned description does not exclude an embodiment in which the protective material is applied onto the lateral surface of the window layer 410. In the embodiment, the protective material may be applied onto the lateral surface of the window layer 410.

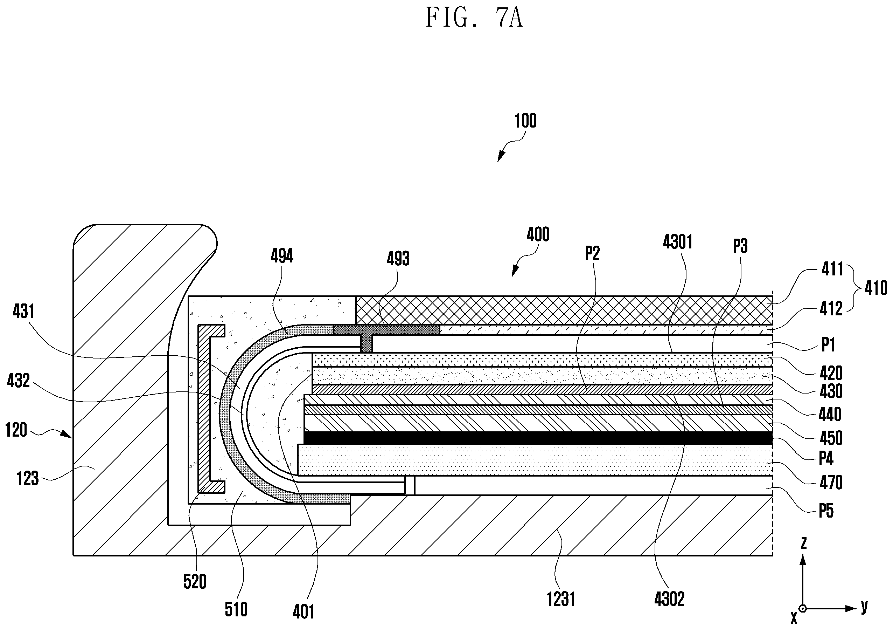

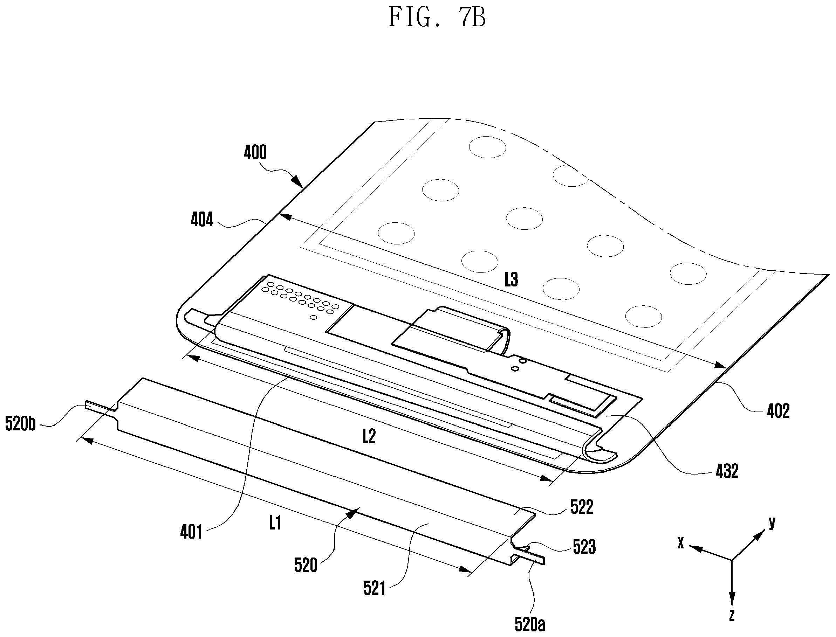

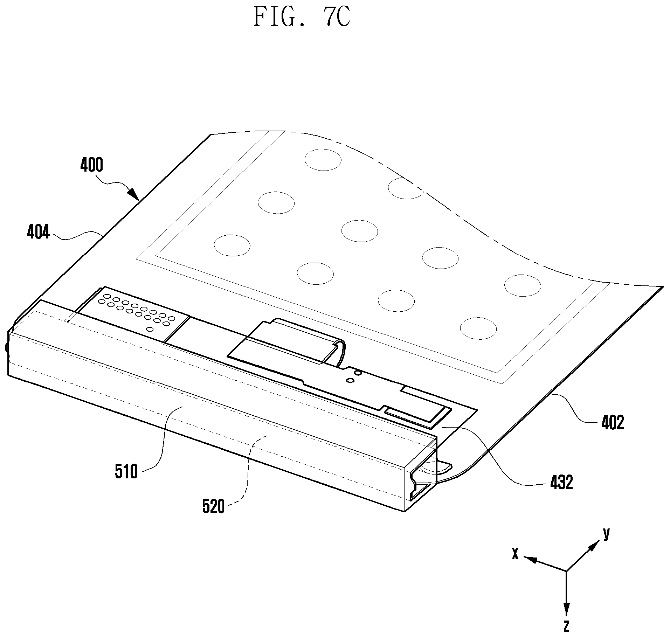

FIG. 7A is a cross-sectional view illustrating a state in which a molding part and a protection member are disposed between the bending portion and the lateral member of the flexible display according to the embodiment of the present disclosure. FIGS. 7B and 7C are schematic views illustrating a process of applying the molding part and the protection member to the flexible display according to the embodiment of the present disclosure.

According to the embodiment, as illustrated in FIGS. 6D, 6E, and 7A, the electronic device 100 may include a molding part 510 disposed in the second housing 120 and configured to surround the bending portion 432. In the embodiment, in the first edge area 401 of the flexible display 400, the molding part 510 may be disposed to surround the edges of the layers (e.g., the window layer 410) stacked on the top surface of the display panel 430, the edges of the layers (e.g., the polymer layer 440, the support plate 450, the digitizer 460, and/or the reinforcement plate 470) stacked on the back surface 4302, and the bending portion 432. In the embodiment, the molding part 510 may be disposed to surround the lateral surface of the flexible display 400. For example, the molding part 510 may be disposed to surround the first edge area 401, the second edge area 402, the third edge area 403, and the fourth edge area of the flexible display 400. In the embodiment, the molding part 510 may be disposed to surround at least one of the edge areas 401, 402, 403, and 404 of the flexible display 400. In the embodiment, a portion between the flexible display 400 and the support members 1131 and 1231 may be filled with the molding part 510.

In the embodiment, the bending portion 432 may be positioned in the molding part 510 formed by curing a liquid molding liquid injected into a periphery of the first edge area 401 of the flexible display 400. In the embodiment, the molding part 510 may be formed by curing a molding liquid injected by a molding injector. For example, the molding liquid may be cured by at least one of natural curing, thermal curing, and ultraviolet curing. In the embodiment, when the molding liquid is cured, the molding part 510 may be made of a material (e.g., a soft molding liquid) having a molding modulus value of about 10 MPa or less. In the embodiment, when the molding liquid is cured, the molding part 510 may be made of a material having a molding modulus value of about 5 MPa or less. In the embodiment, when the molding liquid is cured, the molding part 510 may be made of a material having a molding modulus value of about 1 MPa or less. In the embodiment, the molding part 510 may be formed by curing a silicone-based molding liquid. In the embodiment, because the molding part 510 accommodates a slip between the layers (e.g., the window layer 410 and the display panel 430) of the flexible display 400 generated by the folding and unfolding operations of the electronic device 400, the molding part 510 may reduce the occurrence of a defect such as buckling, which may assist in improving the surface quality of the flexible display 400.

According to the embodiment, as illustrated in FIGS. 7A and 7C, the electronic device 100 may include a protection member (e.g., a rigid body) 520 at least partially embedded in the molding part 510. In the embodiment, with reference to FIG. 7B, the protection member 520 may include a plate portion 521, a first bent portion 522 bent from an upper end of the plate portion 521 in a direction of the bending portion 432 (e.g., a y-axis direction), and a second bent portion 523 bent from a lower end of the plate portion 521 in the direction of the bending portion 432 (e.g., the y-axis direction). In the embodiment, the plate portion 521 may be sized to have a first length L1 in the x-axis direction and a first height H in the z-axis direction. In the embodiment, the first length L1 may be equal to or longer than a second length (e.g., a second length L2 in FIG. 7A) of the bending portion 432 in the x-axis direction.

In the embodiment, a width of the first bent portion 522 and a width of the second bent portion 523 may be equal to or different from each other. In the embodiment, the first bent portion 522 and/or the second bent portion 523 may be bent at a right angle. In any embodiment, the first bent portion 522 and the second bent portion 523 may be bent to have an obtuse or acute angle with respect to the plate portion 521. In the embodiment, the first bent portion 522 and/or the second bent portion 523 may be provided in the form of a planar or curved surface. In the embodiment, the protection member 520 may be formed to have the first length L1 in the x-axis direction.

In the embodiment, with reference to FIG. 7C, the protection member 520 may be disposed such that the plate portion 521 at least overlaps the bending portion 432 when the second lateral member 123 is viewed from the outside (e.g., viewed in the y-axis direction). In the embodiment, the protection member 520 may be disposed to be spaced apart from the bending portion 432 at a designated interval. In the embodiment, at least a part of the protection member 520 may be formed in a shape that surrounds at least a part of the bending portion 432. In the embodiment, the protection member 520 may be formed in a ' 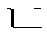 ' shape. In the embodiment, the protection member 520 may have a value of a modulus higher than at least one of the first modulus of the first protective material 491, the second modulus of the second protective material 492, the third modulus of the third protective material 493, and the fourth modulus of the fourth protective material 494. In the embodiment, the protection member 520 may be made of a material having strength for improving the durability of the bending portion 432 against an external impact. In the embodiment, the protection member 520 may include at least one of metal (e.g., SUS), PC, and FRP (e.g., CFRP and/or GFRP). In the embodiment, the protection member 520 protects the bending portion 432, which may assist in improving the durability of the flexible display 400.

According to the embodiment, the layers (e.g., the display panel 430, the polymer layer 440, the support plate 450, the digitizer 460, and/or the reinforcement plate 470) of the flexible display 400 may be formed to have a normal step structure for uniform application in the first edge area 401 at the time of injecting the molding liquid for forming the molding part 510. In the embodiment, the layers 430, 440, 450, and 470 may each be disposed in the first edge area 401 so that edges of the layers disposed below the layers 430, 440, 450, and 470 when the flexible display 400 is viewed from above. For example, in the first edge area 401, the polymer layer 440 may be disposed to be closer to the bending portion 432 than the display panel 430 when the flexible display 400 is viewed from above. In the embodiment, in the first edge area 401, the support plate 450 may be disposed to be closer to the bending portion 432 than the polymer layer 440 when the flexible display 400 is viewed from above.

In the embodiment, the protection member 520 may be formed such that the first length L1 in the width direction (e.g., the x-axis direction) is equal to or longer than the second length L2 of the bending portion 432 of the flexible display 400. In the embodiment, the first length L1 of the protection member 520 may be equal to or shorter than an overall length L3 of the flexible display 400 in the width direction (e.g., the x-axis direction). For example, the first length L1 of the protection member 520 may be longer than the second length L2 of the bending portion 432 and shorter than the overall length L3 of the flexible display 400 in the width direction. In the embodiment, the protection member 520 may include fixing guides 520a and 520b respectively extending from two opposite ends of the plate portion 521.

According to the embodiment, a space including the bending portion 432 and the protection member 520 may be filled with the molding liquid. For example, the space including the bending portion 432 of the flexible display 400 may be filled with the molding liquid, and the molding liquid may be cured as the molding part 510 by at least one of natural curing, thermal curing, and ultraviolet curing. According to the embodiment, the fixing guides 520a and 520b protruding from the two opposite ends of the molding part 510 may be removed by a cutting process after the molding liquid is cured.

According to the embodiment, the protection member 520 may be disposed to face at least one of the first edge area 401, the second edge area 402, the third edge area 403, and the fourth edge area 404 of the flexible display 400. In the embodiment, the protection member 520 may be disposed to face all the edge areas 401, 402, 403, and 404 of the flexible display 400. Therefore, the protection member 520 may be disposed in the molding part 510 and configured to face the edge areas 401, 402, 403, and 404 of the flexible display 400 and protect the flexible display 400 from an external impact.

According to the embodiment, the protection member 520 may be disposed in the protective materials (e.g., the first protective material 491, the second protective material 492, the third protective material 493, and the fourth protective material 494) disposed in the flexible display 400. In the embodiment, the protection member 520 may be disposed such that the protective material (e.g., the first protective material 491 and the third protective material 493) having a relatively low modulus may be disposed sparsely or at large intervals in consideration of the degree of movement of the flexible display 400, and the protective materials (e.g., the second protective material 492 and the fourth protective material 494) having a relatively high modulus may be disposed densely or at small intervals.

In the embodiment, in case that the protection member 520 is made of a metallic material, the protection member 520 may be used as a radiator for an antenna. In the embodiment, at least a part of the protection member 520 may be electrically connected to a wireless communication circuit (e.g., a transceiver) disposed in the internal space of the electronic device 100 (e.g., the internal space of the first housing 110 and/or the second housing 120), such that the protection member 520 may be used as a preset antenna to transmit or receive radio signals in at least one designated frequency band.

In the embodiment, the protection member 520 may be made of a conductive material and electrically connected to at least one of the first housing 110, the second housing 120, and the ground disposed in the internal space of the electronic device 100. In the embodiment, the protection member 520 may guide electric charges, which are introduced into the electronic device 100, or electric charges, which are generated in the electronic device 100, to the ground, the first housing 110, and/or the second housing 120. In the embodiment, the electric charges, which are introduced between the lateral members 113 and 123 and the flexible display 400, may be guided to the support members (e.g., the first support member 1131 and/or the second support member 1231) and/or the ground of the peripheral structure (e.g., the substrate) through the second bent portion 523. In the embodiment, the electric charges, which are generated in the electronic device 100, may be guided to the support members (e.g., the first support member 1131 and/or the second support member 1231) and/or the ground of the peripheral structure (e.g., the substrate) through the protection member 520. Therefore, an erroneous operation of the electronic device 100 caused by electrostatic discharge (ESD), in which electric charges are discharged to the peripheral electronic components, may be reduced.

According to the embodiment, in case that the protection member 520 is made of metal, the protection member 520 may be used as a dummy conductor (e.g., a parasitic pattern or a dummy pattern) of the first lateral member 113 and/or the second lateral member 123 used as antennas. In this case, the protection member 520 may be disposed to have capacitively coupled intervals from the first lateral member 113 and/or the second lateral member 123. Therefore, the protection member 520 may assist in improving radiation performance (e.g., expanding the bandwidth) of the antenna that operates by means of the first lateral member 113 and/or the second lateral member 123. In the embodiment, the antenna may also include a laser direct structuring (LDS) pattern disposed in the internal space of the electronic device 100, disposed on an antenna carrier or a substrate, and disposed at a position that may be coupled to the protection member 520.

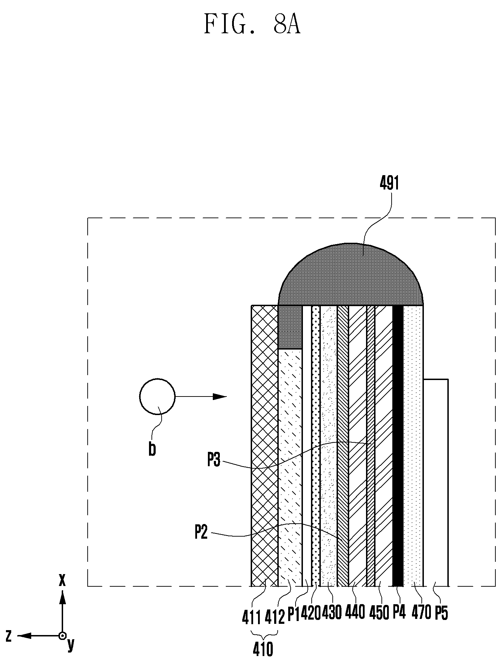

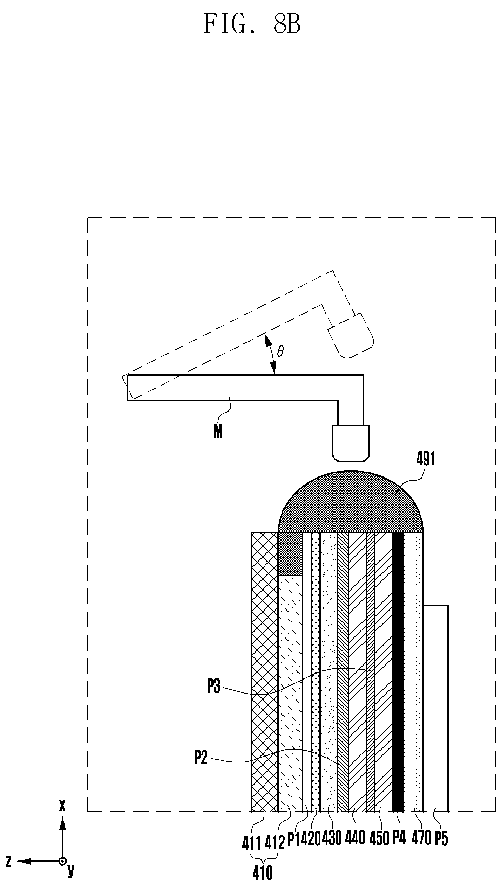

FIG. 8A is a schematic view illustrating an experimental process of dropping a ball onto a front surface of the flexible display 400 according to the embodiment of the present disclosure. FIG. 8B is a schematic view illustrating a Charpy impact test on the lateral surface of the flexible display 400 according to the embodiment of the present disclosure.

In the embodiment, a ball drop test in FIG. 8A may be an experiment for identifying a degree to which an impact is applied to the edge areas 401, 402, 403, and 404 of the flexible display 400 when a ball b having predetermined strength is dropped toward the front surface of the flexible display 400 (e.g., the surface directed in the +Z direction in FIG. 4A). In the embodiment, the ball drop test may be an experiment performed on the assumption that an impact is applied to the edge areas 401, 402, 403, and 404 of the flexible display 400 on the front surface of the electronic device 100. For example, the ball drop test in FIG. 8A may be an experiment for identifying the durability of the flexible display 400 by changing a distance between the flexible display 400 and the ball b. The durability of the flexible display 400 may increase as the distance between the flexible display 400 and the ball b increases. Table 3 to be described below may show a result of identifying durability of the first display portion covered by the first protective material 491 and the second display portion covered by the second protective material 492 when the ball b having predetermined strength is dropped toward the front surface of the flexible display 400. In the embodiment, a drop distance in Table 3 may be a maximum drop distance in a range in which the flexible display 400 is not damaged. Resulting values in Table 3 may be determined on the premise that the first protective material 491 and the second protective material 492 having physical properties shown in Table 1 are used.

**[Table 3]**

| | | Not filled | First protective material 491 | Second protective material 492 |
|---|---|---|---|---|
| Modulus (MPa) of protective material | | | about 3 to 8 | about 1,400 to 2,400 |
| Drop distance (cm) | Planar portion | 14 cm | | |
| | Edge area | 11 cm | 17 to 19 cm | 18 to 25 cm |
| | Folding portion | 6 cm | 12 cm | - |

In the embodiment, the first protective material 491 and the second protective material 492 may be positioned in the edge areas 401, 402, 403, and 404 of the flexible display 400. In this case, the planar portions 130a and 130b, which are spaced apart from the edge areas 401, 402, 403, and 404 of the flexible display 400, may have constant durability regardless of the configuration in which the first protective material 491 and the second protective material 492 are disposed in the edge areas 401, 402, 403, and 404. For example, as shown in Table 3, the drop distance of the ball b, which does not cause damage to the planar portion, may be constant as about 14 cm regardless of the configuration in which the first protective material 491 and the second protective material 492 are disposed in the edge areas 401, 402, 403, and 404. In the embodiment, as shown in Table 3, in case that the first protective material 491 is disposed in the edge areas 401, 402, 403, and 404, the drop distance of the ball b, which does not cause damage to the edge areas 401, 402, 403, and 404, may be about 17 to 19 cm. In contrast, in case that the protective materials (e.g., the first protective material 491 and the second protective material 492) are not disposed in the edge areas 401, 402, 403, and 404, the drop distance of the ball b, which does not cause damage to the edge areas 401, 402, 403, and 404, may be about 11 cm. In case that the first protective material 491 is disposed in the edge areas 401, 402, 403, and 404, the drop distance of the ball b, which does not cause damage to the edge areas 401, 402, 403, and 404, may be increased by about 55% to 73% in comparison with the case in which the protective materials 491 and 492 are not disposed in the edge areas 401, 402, 403, and 404. In summary, it can be ascertained that in case that the first protective material 491 is disposed in the edge areas 401, 402, 403, and 404 of the flexible display 400, the durability increases in comparison with the case in which the protective materials 491 and 492 are not disposed in the edge areas 401, 402, 403, and 404. In the embodiment, in case that the first protective material 491 is disposed in the folding portion 130c, the drop distance of the ball b, which does not cause damage to the folding portion 130c, may be about 12 cm. In contrast, in case that the protective materials 491 and 492 are not disposed in the folding portion 130c, the drop distance of the ball b, which does not cause damage to the folding portion 130c, may be about 6 cm. In case that the first protective material 491 is disposed on the folding portion 130c, the drop distance of the ball b, which does not cause damage to the edge areas 401, 402, 403, and 404, may be increased by about 100% in comparison with the case in which the protective materials 491 and 492 are not disposed on the folding portion 130c. In summary, it can be ascertained that in case that the first protective material 491 is disposed on the folding portion 130c of the flexible display 400, the durability increases in comparison with the case in which the protective materials 491 and 492 are not disposed on the folding portion 130c.

In the embodiment, as shown in Table 3, in case that the second protective material 492 is disposed in the edge areas 401, 402, 403, and 404, the drop distance of the ball b, which does not cause damage to the edge areas 401, 402, 403, and 404, may be about 18 to 25 cm. In contrast, in case that the protective materials 491 and 492 are not disposed in the edge areas 401, 402, 403, and 404, the drop distance of the ball b, which does not cause damage to the edge areas 401, 402, 403, and 404, may be about 11 cm. In case that the second protective material 492 is disposed in the edge areas 401, 402, 403, and 404, the drop distance of the ball b, which does not cause damage to the edge areas 401, 402, 403, and 404, may be increased by about 64% to 127% in comparison with the case in which the protective materials 491 and 492 are not disposed in the edge areas 401, 402, 403, and 404. In summary, it can be ascertained that in case that the second protective material 492 is disposed in the edge areas 401, 402, 403, and 404 of the flexible display 400, the durability increases in comparison with the case in which the protective materials 491 and 492 are not disposed in the edge areas 401, 402, 403, and 404.

In the embodiment, FIG. 8B may illustrate the Charpy test on the assumption that an impact is applied directly to the edge areas 401, 402, 403, and 404 of the flexible display 400. In the embodiment, the Charpy test may be an experiment performed on the assumption that an impact is applied to the edge areas 401, 402, 403, and 404 of the flexible display 400 on the lateral surface of the electronic device 100. The Charpy test may apply an impact to the first protective material 491 and the second protective material 492 disposed in the edge areas 401, 402, 403, and 404 of the flexible display 400 by means of a rotatable Charpy device H. Table 4 to be described below may show a result of identifying a maximum rotation angle θ of the Charpy device H in a range in which the flexible display 400 is not damaged in the case in which the first protective material 491 and/or the second protective material 492 are disposed in the edge areas 401, 402, 403, and 404 of the flexible display 400 and the case in which the first protective material 491 and the second protective material 492 are not disposed in the edge areas 401, 402, 403, and 404 of the flexible display 400. The durability of the flexible display 400 may increase as the rotation angle θ of the Charpy device H increases. Resulting values in Table 4 may be determined on the premise that the first protective material 491 and the second protective material 492 having physical properties shown in Table 1 are used.

**[Table 4]**

| | Experiment position | Not filled | First protective material 491 | Second protective material 492 |
|---|---|---|---|---|
| Modulus (MPa) of protective material | Edge area | | about 3 to 8 | about 1,400 to 2,400 |
| Rotation angle (°) of Charpy device H | | 27° | 40° | 32° |

In the embodiment, as shown in Table 4, in case that the first protective material 491 is disposed in the edge areas 401, 402, 403, and 404, the maximum the rotation angle θ of the Charpy device H may be 40° in the range in which the flexible display 400 is not damaged. In contrast, in case that the protective materials (e.g., the first protective material 491 and the second protective material 492) are not disposed in the edge areas 401, 402, 403, and 404, the maximum the rotation angle θ of the Charpy device H may be 27° in the range in which the flexible display 400 is not damaged. It can be ascertained that in case that the first protective material 491 is disposed in the edge areas 401, 402, 403, and 404, the maximum the rotation angle θ of the Charpy device H is increased by about 48% in comparison with the case in which the protective materials 491 and 492 are not disposed in the edge areas 401, 402, 403, and 404. In summary, it can be ascertained that the durability of the flexible display 400 increases in the edge areas when the first protective material 491 is disposed in the edge areas 401, 402, 403, and 404. In the embodiment, as shown in Table 4, in case that the second protective material 492 is disposed in the edge areas 401, 402, 403, and 404, the maximum the rotation angle θ of the Charpy device H may be 32° in the range in which the flexible display 400 is not damaged. In contrast, in case that the protective materials 491 and 492 are not disposed in the edge areas 401, 402, 403, and 404, the maximum the rotation angle θ of the Charpy device H may be 27° in the range in which the flexible display 400 is not damaged. It can be ascertained that in case that the second protective material 492 is disposed in the edge areas 401, 402, 403, and 404, the maximum the rotation angle θ of the Charpy device H is increased by about 19% in comparison with the case in which the protective materials 491 and 492 are not disposed in the edge areas 401, 402, 403, and 404. In summary, it can be ascertained that the durability of the flexible display 400 is increased in the edge areas 401, 402, 403, and 404 when the second protective material 492 is disposed in the edge areas 401, 402, 403, and 404. In the embodiment, Table 5 may illustrate results of the ball drop test and the Charpy test in the state in which the fourth protective material 494 is disposed on the bending portion 432 of the flexible display 400. As illustrated in FIG. 6D, 'Experiment 1' to be described below may be the results of the ball drop test and the Charpy test on the bending portion 432 of the flexible display 400 in a case in which the interval W1 of the third protective material 493 between the edge of the window layer 410 and the edge of the fourth protective material 494 is about 230 um and the thickness W2 of the fourth protective material 494 is about 200 um. As illustrated in FIG. 6E, 'Experiment 2' to be described below may be the results of the ball drop test and the Charpy test on the bending portion 432 of the flexible display 400 in a case in which the interval W'1 of the third protective material 493 between the edge of the window layer 410 and the edge of the fourth protective material 494 is about 460 um and the thickness W'2 of the fourth protective material 494 is about 110 um. Resulting values in Table 5 may be determined on the premise that the third protective material 493 and the fourth protective material 494 having physical properties shown in Table 2 are used.

**[Table 5]**

| | Bending portion 432 | | |
|---|---|---|---|
| Experiment type | Not filled | Experiment 1 | Experiment 2 |
| Drop distance (cm) | 7 cm | 21 cm | 15 cm |
| Rotation angle (°) of Charpy device H | 6° | 12° | 11° |

In the embodiment, as shown in Table 5, in case that the fourth protective material 494 is disposed on the bending portion 432 under a condition of 'Experiment 1', the drop distance of the ball b, which does not cause damage to the bending portion 432, may be about 21 cm. In contrast, in case that the fourth protective material 494 is not disposed on the bending portion 432, the drop distance of the ball b, which does not cause damage to the bending portion 432, may be about 7 cm. It can be ascertained that in case that the fourth protective material 494 is disposed on the bending portion 432, the drop distance of the ball b, which does not cause damage to the bending portion 432 is increased by about 200% in comparison with the case in which the fourth protective material 494 is not disposed on the bending portion 432. In summary, it can be ascertained that in case that the fourth protective material 494 is disposed on the bending portion 432 of the flexible display 400, the durability is increased in comparison with the case in which the fourth protective material 494 is not disposed on the bending portion 432. In the embodiment, as shown in Table 5, in case that the fourth protective material 494 is disposed on the bending portion 432 under a condition of 'Experiment 2', the drop distance of the ball b, which does not cause damage to the bending portion 432, may be about 15 cm. In contrast, in case that the fourth protective material 494 is not disposed on the bending portion 432, the drop distance of the ball b, which does not cause damage to the bending portion 432, may be about 7 cm. It can be ascertained that in case that the fourth protective material 494 is disposed on the bending portion 432, the drop distance of the ball b, which does not cause damage to the bending portion 432 is increased by about 114% in comparison with the case in which the fourth protective material 494 is not disposed on the bending portion 432. In summary, it can be ascertained that in case that the fourth protective material 494 is disposed on the bending portion 432 of the flexible display 400, the durability is increased in comparison with the case in which the fourth protective material 494 is not disposed on the bending portion 432. In the embodiment, as shown in Table 5, in case that the fourth protective material 494 is disposed on the bending portion 432 under the condition of 'Experiment 1', the maximum the rotation angle θ of the Charpy device H may be 12° in the range in which the flexible display 400 is not damaged. In contrast, in case that the fourth protective material 494 is disposed on the bending portion 432, the maximum the rotation angle θ of the Charpy device H may be 6° in the range in which the flexible display 400 is not damaged. It can be ascertained that in case that the fourth protective material 494 is disposed on the bending portion 432, the maximum the rotation angle θ of the Charpy device H is increased by about 100% in comparison with the case in which the fourth protective material 494 is not disposed on the bending portion 432. In summary, it can be ascertained that the durability of the flexible display 400 is increased in the bending portion 432 when the fourth protective material 494 is disposed on the bending portion 432.

In the embodiment, as shown in Table 5, in case that the fourth protective material 494 is disposed on the bending portion 432 under the condition of 'Experiment 2', the maximum the rotation angle θ of the Charpy device H may be 11° in the range in which the flexible display 400 is not damaged. In contrast, in case that the fourth protective material 494 is disposed on the bending portion 432, the maximum the rotation angle θ of the Charpy device H may be 6° in the range in which the flexible display 400 is not damaged. It can be ascertained that in case that the fourth protective material 494 is disposed on the bending portion 432, the maximum the rotation angle θ of the Charpy device H is increased by about 83% in comparison with the case in which the fourth protective material 494 is not disposed on the bending portion 432. In summary, it can be ascertained that the durability of the flexible display 400 is increased in the bending portion 432 when the fourth protective material 494 is disposed on the bending portion 432.

According to the embodiment of the present disclosure, the first protective material 491, the second protective material 492, the third protective material 493, and the fourth protective material 494 accommodate a slip between the layers of the flexible display 400, which is generated by the operation of folding or unfolding the electronic device 100 (e.g., the folding operation), such that the occurrence of a defect such as buckling may be reduced, which may assist in improving the surface quality of the flexible display 400. In addition, the first protective material 491, the second protective material 492, the third protective material 493, and the fourth protective material 494 may protect the edge areas 401, 402, 403, and 404 of the flexible display 400 from an external impact and foreign substances.

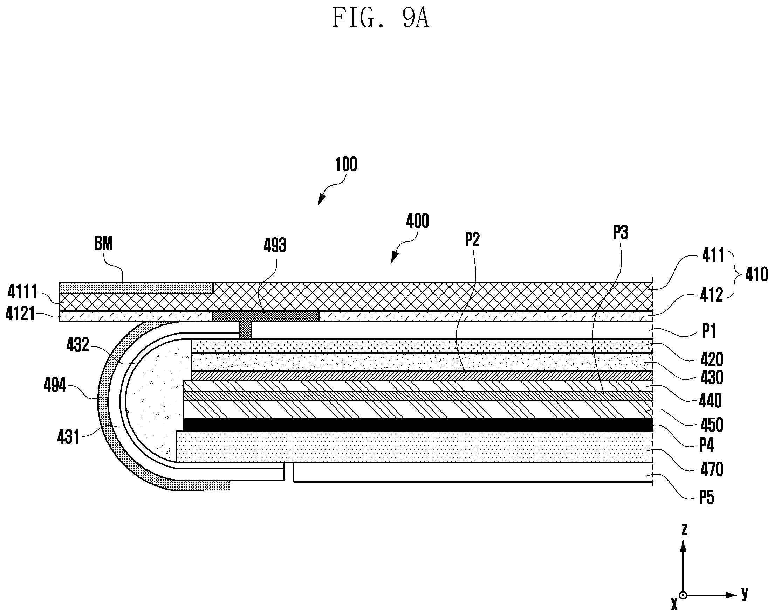

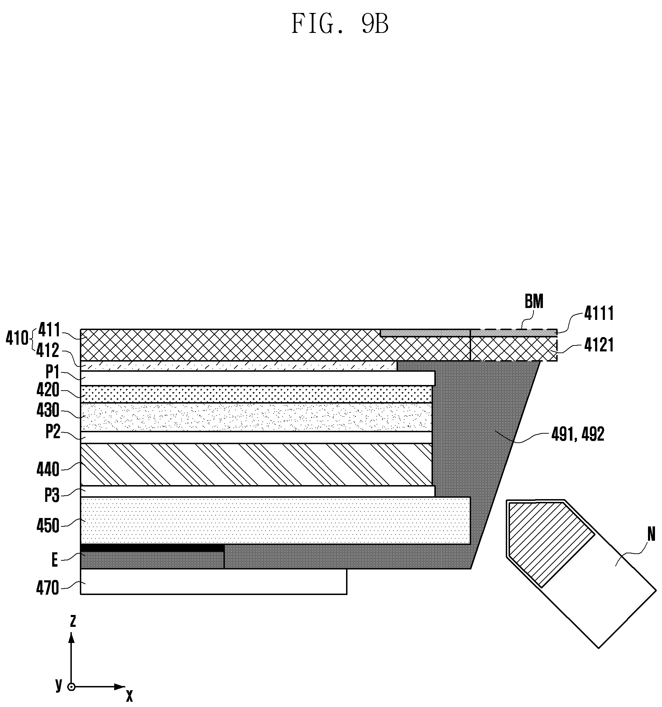

FIG. 9A is a partially cross-sectional view of the electronic device 100 according to the embodiment of the present disclosure when viewed along line 6d-6d in FIG. 1A, i.e., a cross-sectional view illustrating a state in which the window layer 410 of the flexible display 400 extends toward the bending portion 432. FIG. 9B is a cross-sectional view illustrating a state in which the window layer 410 of the flexible display 400 according to the embodiment of the present disclosure extends toward the lateral surface of the flexible display 400.

According to the embodiment, as illustrated in FIG. 9A, edges 4111 and 4121 (e.g., an edge 4111 of the first layer 411 and an edge 4121 of the second layer 412) of the window layer 410 may be disposed to have a larger size while overlapping the bending portion 432 or overlapping the bending portion 432 when the flexible display 400 is viewed from above. In the embodiment, the edge 4111 of the first layer 411 may extend to have a size that at least overlaps the bending portion 432 or includes the bending portion 432 when the flexible display 400 is viewed from above. A black matrix (BM) (e.g., BM in FIGS. 9A and 9B) may be printed on the edges 4111 and 4121 of the window layer 410. For example, the BM may be printed on the edge 4111 of the first layer 410. In this case, the bending portion 432 may be covered by the edges 4111 and 4121 of the window layer 410 when the flexible display is viewed from above.

According to the embodiment, as illustrated in FIG. 9B, the edges 4111 and 4121 of the window layer 410, which are positioned in the second edge area 402 and the fourth edge area 404 in which no slip is caused by the folding operation of the electronic device 100 in the flexible display 400, may further protrude than the edges of the layers positioned below the window layer 410. For example, the edges of the layers positioned below the window layer 410 may be included in the edges 4111 and 4121 of the window layer 410. In the embodiment, the edges 4111 and 4121 of the window layer 410 extending from the second edge area 402 and the fourth edge area 404 may serve as guides so that the first protective material 491 and/or the second protective material 492 are applied onto the edge of each of the layers of the flexible display 400 when the portion between the flexible display 400 and the lateral members 113 and 123 is filled with the first protective material 491 and/or the second protective material 492 by an injection device N. In the embodiment, the BM may be printed on the edges 4111 and 4121 of the window layer 410 positioned in the second edge area 402 and the fourth edge area 404. In this case, the first protective material 491 and/or the second protective material 492 may be covered by the edges 4111 and 4121 of the window layer 410 when the flexible display is viewed from above. Therefore, it is possible to solve the problem in which the first protective material 491 and/or the second protective material 492 are visually recognized from the front surface of the electronic device 100.

FIG. 10 is a view illustrating a process of filling, with the protective material, a lateral surface of a partial layer of the window layer 410 and a lateral surface of a layer disposed below the window layer 410 in an edge area of the flexible display 400 according to the embodiment of the present disclosure.

According to the embodiment, as illustrated in FIG. 10, the method of applying the protective materials (e.g., the first protective material 491, the second protective material 492, the third protective material 493, and/or the fourth protective material 494) onto the edge areas 401, 402, 403, and 404 of the flexible display 400 may include a step of seating the window layer 410 of the flexible display 400 on a guide jig J, and a step of injecting the protective material into the edge areas 401, 402, 403, and 404 of the flexible display 400 by means of the injection device N. In the embodiment, a position of the flexible display 400 may be fixed by the guide jig J. For example, the position of the flexible display 400 may be fixed as the window layer 410 is seated on the guide jig J. As described above, the amount of occurrence of a slip of the window layer 410 positioned on the outermost peripheral layer of the flexible display 400 may be larger than the amount of occurrence of a slip of other layers. In particular, the amount of occurrence of a slip of the first layer 411 of the window layer 410 may be larger than the amount of occurrence of a slip of the second layer 412. Therefore, the configuration in which no protective material is applied onto the lateral surface of the window layer 410 may induce a natural slip to the window layer 410 or the first layer 411 of the window layer 410, which may assist the folding operation of the flexible display 400. Therefore, the guide jig J may have a groove formed to accommodate the first layer 411 of the window layer 410. Because the first layer 411 of the window layer 410 is positioned in the groove of the guide jig J, no protective material may be applied onto the lateral surface of the first layer 411 when the protective material is injected into the lateral surface of the flexible display 400 by the injection device N. Therefore, the protective material may be applied only onto the lateral surfaces of the layers positioned below the window layer 410. Because the protective material of the flexible display 400 does not hinder the slip of the first layer 411, it is possible to prevent buckling that occurs when the slip is hindered during the folding operation of the electronic device 100. In addition, in the flexible display 400, the protective materials are applied onto the lateral surfaces of the layers positioned below the first layer 411, which may improve the durability against an external impact. The description has been made on the premise that no protective material is applied onto the first layer 411. However, no protective material may be applied onto the lateral surface of the window layer 410. In this case, the protective material may be applied onto the lateral surface of the flexible display 400 in the state in which the window layer 410 of the flexible display 400 is positioned in the groove of the guide jig J.

FIGS. 5, 6A to 6E, 7A, and 8A to 10 have been described above on the premise that the reinforcement plate 470 is disposed below the support plate 450 of the flexible display 400. However, the present disclosure is not limited thereto. In the embodiment, the digitizer 460 may be disposed between the support plate 450 and the reinforcement plate 470 or substituted for the reinforcement plate 470 and disposed below the support plate 450.

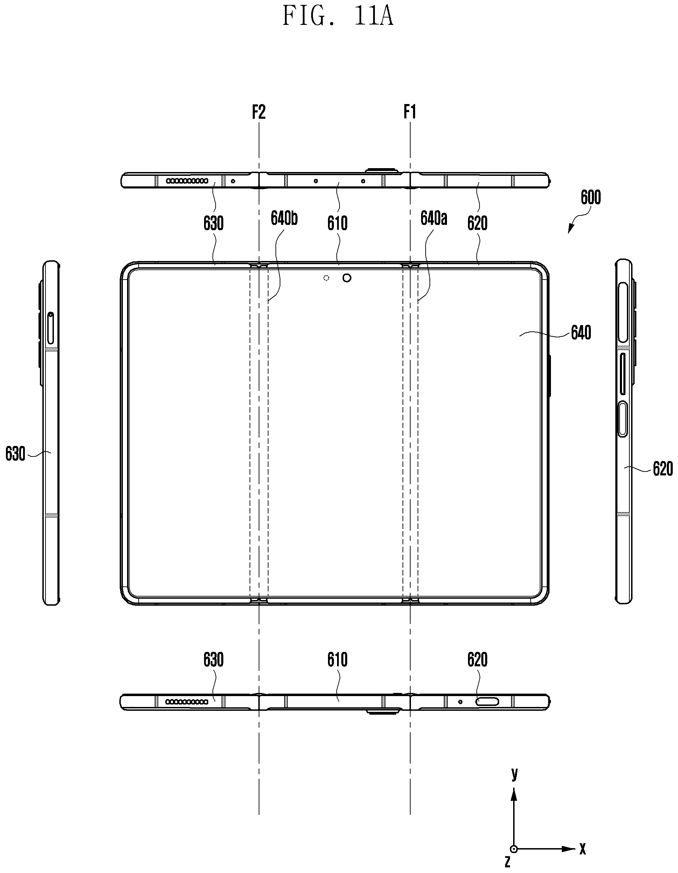

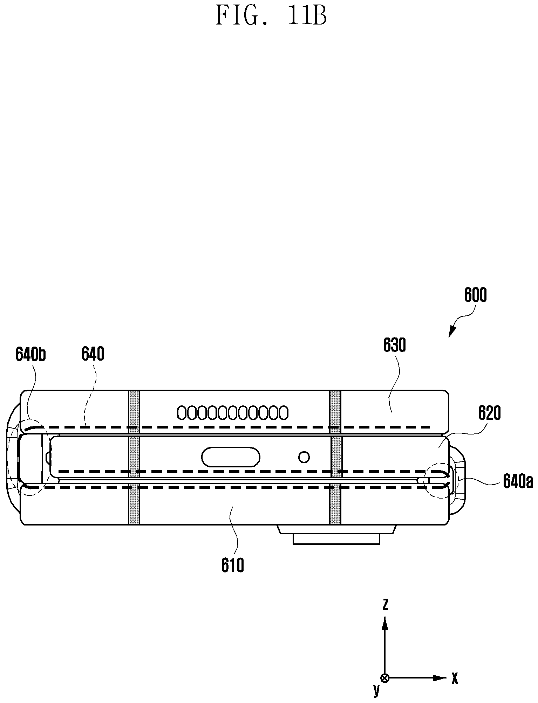

FIG. 11A is a top plan view of the electronic device in the unfolded state according to various embodiments of the present disclosure. FIG. 11B is a side view of the electronic device in the folded state according to various embodiments of the present disclosure.

Hereinafter, an electronic device 600 according to an embodiment different from the electronic device 100 described with reference to FIGS. 1A to 10 will be described. To describe the electronic device 600 in FIG. 11A, the constituent elements, which are substantially the same as the constituent elements of the electronic device 100 in FIG. 1A, will be designated by the same reference numerals, and a detailed description thereof will be omitted. In addition, the description of the protective materials (e.g., the first protective material 491, the second protective material 492, the third protective material 493, the fourth protective material 494, the fifth protective material, and/or the sixth protective material) described with reference to FIGS. 1A to 10 may be equally applied to the electronic device 600 to be described with reference to FIG. 11A. For example, a flexible display 640 (e.g., the flexible display 400 in FIG. 4A) may be divided depending on the degree of movement. In the embodiment, the flexible display 640 may be divided into a first display portion having a first degree of movement, and a second display portion having a second degree of movement smaller than the first degree of movement. The protective materials may have different properties depending on the degree of movement of the flexible display 640, and the protective materials may be disposed in the edge areas 401, 402, 403, and 404 of the flexible display 640.

With reference to FIGS. 11A and 11B, an electronic device 600 may include a first housing 610, a second housing 620 connected to the first housing 610 and configured to be foldable about a first folding axis F1 by means of the first hinge device (not illustrated) at one side of the first housing 610, and a third housing 630 connected to the first housing 610 and configured to be foldable about the second folding axis F2 by means of the second hinge device (not illustrated) at the other side of the first housing 610. In the embodiment, the electronic device 600 may include the flexible display 640 extending from at least a part of the second housing 620 to at least a part of the third housing 630 while traversing the first housing 610. In the embodiment, the flexible display 640 may be disposed to be supported by the first, second, and third housings 610, 620, and 630.

According to the embodiment, in the folded state (fully folded state), the electronic device 600 may operate such that the first housing 610 faces the second housing 620 and the third housing 630 faces the second housing 620. For example, in the folded state, the electronic device 600 may operate such that the first, second, and third housings 610, 620, and 630 at least partially overlap one another when the first housing 610 is viewed from above. In the embodiment, in the folded state, the electronic device 600 may operate such that the second housing 620 is stacked on the first housing 610 and the third housing 630 is sequentially stacked on the second housing 620. In the embodiment, in the folded state, the flexible display 640 may be bent in a manner (e.g., the in-folding manner) in which the areas corresponding to the first housing 610 and the second housing 620 face each other. In the embodiment, the flexible display 640 may be bent in a manner (e.g., the in-folding manner) in which the areas corresponding to the first housing 610 and the third housing 630 face each other. In this case, in the folded state, the flexible display 640 may include a first folding area 640a formed by folding the first housing 610 and the second housing 620, and a second folding area 640b formed by folding the first housing 610 and the third housing 630. In the embodiment, in the folded state, a curvature of the first folding area 640a may be larger than a curvature of the second folding area 640b. In the embodiment, in the folded state, a radius of curvature of the first folding area 640a may be smaller than a radius of curvature of the second folding area 640b.

According to the embodiment, the flexible display 640 may be divided depending on the degree of movement. In the embodiment, the flexible display 640 may be divided into the first display portion having a first degree of movement, and the second display portion having a second degree of movement smaller than the first degree of movement. In the embodiment, the first display portion may be the folding areas (e.g., the first folding area 640a and the second folding area 640b) that is folded or unfolded in accordance with the rotational operations the first housing 610, the second housing 620, and the third housing 630, and the second display portion may be a first planar portion 611, a second planar portion 621, and a third planar portion 631 kept planar during the folding operation of the electronic device 600.

In the embodiment, the flexible display 640 may have a large degree of movement (or a large deformation amount) in the first folding area 640a and the second folding area 640b. For example, the flexible display 640 may include the first planar portion 611 corresponding to the first housing 610, the second planar portion 621 corresponding to the second housing 620, and the third planar portion 631 corresponding to the third housing 630. The first planar portion 611, the second planar portion 621, and the third planar portion 631 may be areas kept substantially planar without being deformed during the folding operation of the electronic device 600. The first folding portion 640a and the second folding portion 640b may have a larger degree of movement or a larger deformation amount than the first planar portion 611, the second planar portion 621, and the third planar portion 631 during the folding operation of the electronic device 600. In the embodiment, the first protective material 491 may be disposed on a lateral surface of the first folding area 640a and a lateral surface of the second folding area 640b. The second protective material 492 may be disposed in the edge areas 401, 402, 403, and 404 of the flexible display 640, except for the first folding area 640a and the second folding area 640b. The first protective material 491 may accommodate the motions of the first folding area 640a and the second folding area 640b of the flexible display 640 and improve the durability of the lateral surface of the first folding area 640a and the lateral surface of the second folding area 640b. The second protective material 492 may improve the durability of the remaining edge areas 401, 402, 403, and 404, except for the folding areas 640a and 640b of the flexible display 640.

In the embodiment, the first display portion may be the first layer S1 having a relatively large amount of occurrence of a slip, and the second display portion may be the second layer S2 having a relatively small amount of occurrence of a slip. The first layer S1 may include the layers (e.g., the window layer 410, the POL 420, the display panel 430, and the polymer layer 440 in FIG. 4A) positioned above the support plate (e.g., the support plate 450 in FIG. 4A), and the second layer S2 may be the layer (e.g., the digitizer 460, the buffer member E, and/or the reinforcement plate 470 in FIG. 4A) positioned below the support plate. In the embodiment, the first protective material 491, which is relatively soft, may be disposed on lateral surface of the first layer S1 having a large amount of occurrence of a slip. The second protective material 492, which is relatively hard, may be disposed on the lateral surface of the second layer S2 having a smaller amount of occurrence of a slip than the first layer S1.

In the embodiment, the space (e.g., including the space including the POL) between the window layer 410 and the display panel 430 may be filled with the third protective material 493 (e.g., the third protective material 493 in FIG. 6D). Because the third protective material 493 accommodates a slip between the layers of the flexible display 600 generated by the folding and unfolding operations of the electronic device 600, the third protective material 493 may reduce the occurrence of a defect such as buckling, which may improve the surface quality of the flexible display. In the embodiment, the fourth protective material 494 (e.g., the fourth protective material 494 in FIG. 6D) may be disposed to surround the bending portion 432 of the flexible display 600. The durability of the bending portion 432 against an external impact may be ensured by the fourth protective material 494.

In the embodiment, the first display portion may be the area having the first degree of movement in the back surface area of the flexible display 640 that faces the first housing 610, the second housing 620, and the third housing 630. The second display portion may be an area, which has the second degree of movement larger than the first degree of movement, in the back surface area of the flexible display 640. In the embodiment, the fifth protective material may be disposed between the first display portion and the housings 610, 620, and 630. The sixth protective material may be disposed between the second display portion and the housings 610, 620, and 630. In the embodiment, the fifth protective material may be softer than the sixth protective material. In the embodiment, because the first display portion has a relatively larger degree of movement than the second display portion, the fifth protective materials disposed on the first display portion may be disposed more sparsely or at larger intervals than the sixth protective materials disposed on the second display portion. On the contrary, because the second display portion has a relatively smaller degree of movement than the first display portion, the sixth protective materials disposed on the second display portion may be disposed more densely or at smaller intervals than the fifth protective materials disposed on the first display portion. Therefore, the fifth protective material and the sixth protective material may improve the durability of the flexible display 640 against an external impact applied to the electronic device 600 and accommodate the motion of the flexible display 640 relative to the housings 610, 620, and 630. In addition, the protective materials may be disposed at various positions on the flexible display 640.

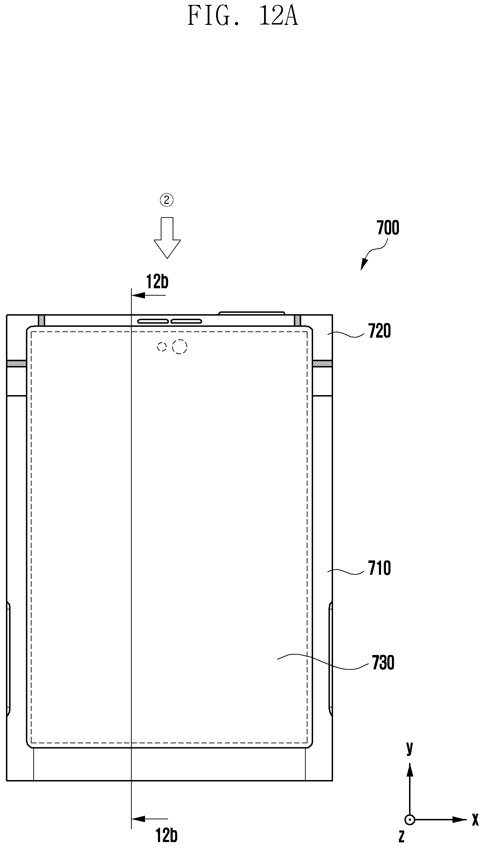

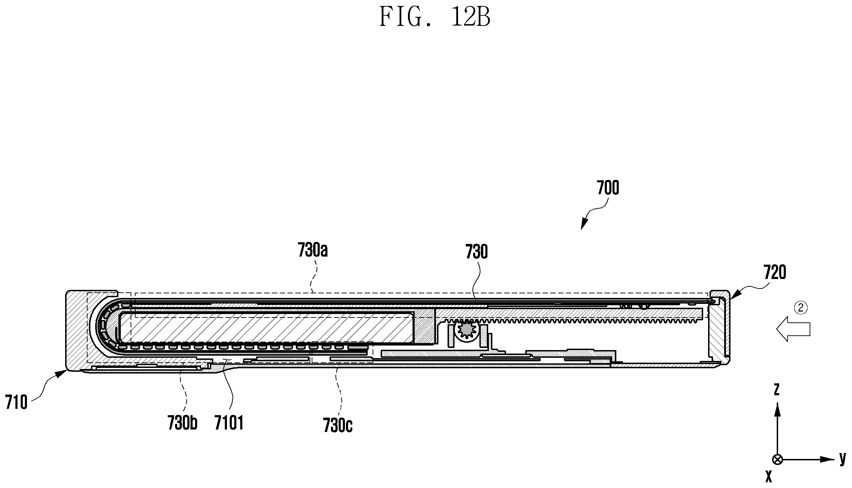

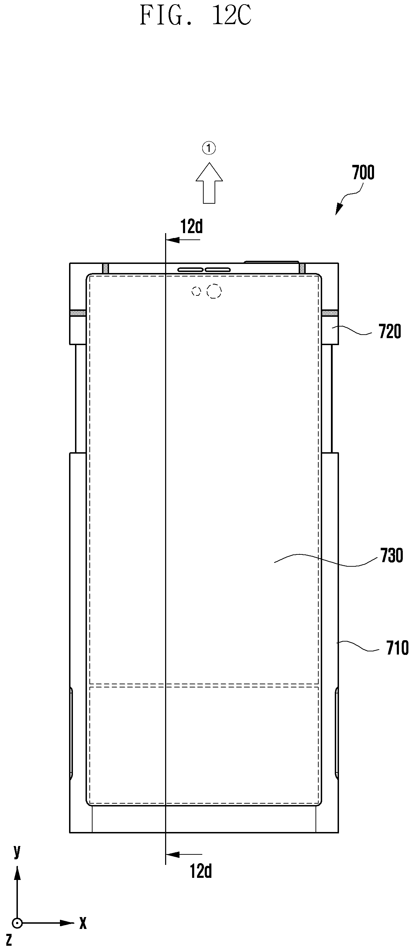

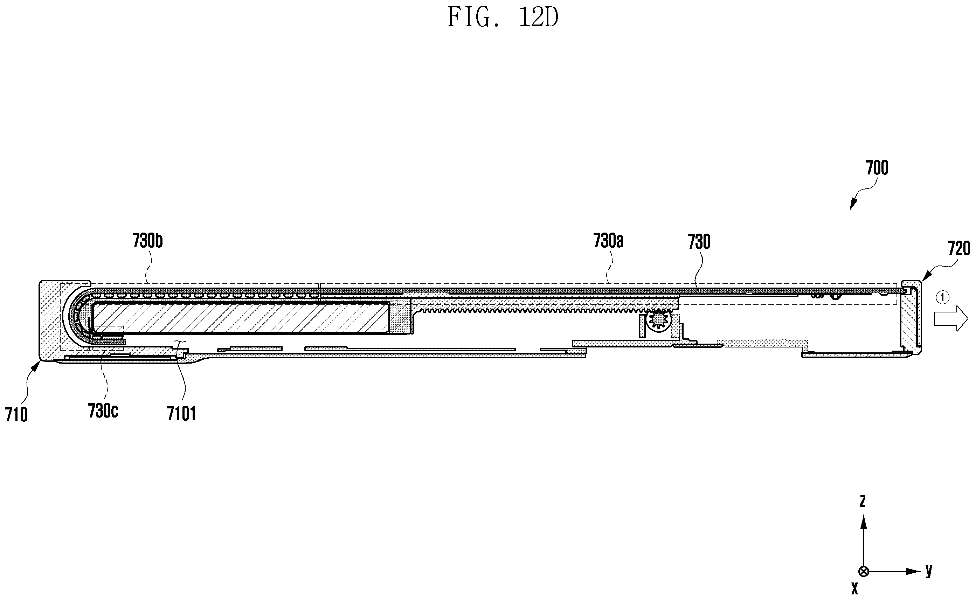

FIG. 12A is a top plan view of the electronic device in a slide-in state according to various embodiments of the present disclosure. FIG. 12B is a cross-sectional view of the electronic device according to various embodiments of the present disclosure when viewed along line 12b-12b in FIG. 12A. FIG. 12C is a top plan view of the electronic device in a slide-out state according to various embodiments of the present disclosure. FIG. 12D is a cross-sectional view of the electronic device according to various embodiments of the present disclosure when viewed along line 12d-12d in FIG. 12C.

Hereinafter, an electronic device 700 according to an embodiment different from the electronic device 100 described with reference to FIGS. 1A to 10 will be described. To describe an electronic device 700 in FIG. 12A, the constituent elements, which are substantially the same as the constituent elements of the electronic device 100 in FIG. 1A, will be designated by the same reference numerals, and a detailed description thereof will be omitted. In addition, the description of the protective materials (e.g., the first protective material 491, the second protective material 492, the third protective material 493, the fourth protective material 494, the fifth protective material, and/or the sixth protective material) described with reference to FIGS. 1A to 10 may be equally applied to the electronic device 700 to be described with reference to FIG. 12A. For example, a flexible display 730 (e.g., the flexible display 400 in FIG. 4A) may be divided depending on the degree of movement. In the embodiment, the flexible display 730 may be divided into a first display portion having a first degree of movement, and a second display portion having a second degree of movement smaller than the first degree of movement. The protective materials may have different properties depending on the degree of movement of the flexible display 730, and the protective materials may be disposed in the edge areas 401, 402, 403, and 404 of the flexible display 730.

With reference to FIGS. 12A to 12D, the electronic device 700 may include a first housing 710, and a second housing 720 coupled to be slidable by a designated reciprocation distance in a designated direction from the first housing 710. In the embodiment, the electronic device 700 may include the flexible display 730 fixed to at least a part of the second housing 720 and configured to change a display area by being slid into or out of an internal space 7101 of the first housing 710 in accordance with a sliding operation of the second housing 720. For example, the flexible display 730 may have a first display area in a state in which the second housing 720 is slid out of the first housing 710 in a first direction (e.g., direction ①). In the embodiment, the flexible display 730 may have a second display area, which is smaller than the first display area, in a state in which the second housing 720 is slid inward in a second direction (e.g., direction ②) opposite to the first direction (e.g., direction ①).

According to the embodiment, the flexible display 730 may include a first planar portion 730a fixed to the second housing 720, a bending portion 730b extending from the first planar portion 730a and configured such that the bending portion 730b is exposed to be visible from the outside in the slide-out state, and the bending portion 730b is invisible from the outside by being slid into the internal space 7101 of the first housing 710 by a bending operation in the slide-in state, and a second planar portion 730c extending from the bending portion 730b and positioned in the internal space 7101 of the first housing 710 without being exposed always. In the embodiment, the bending portion 730b of the flexible display 730 needs to have durability capable of accommodating the user's pressing force while maintaining the surface quality in the slide-out state, and the bending portion 730b of the flexible display 730 needs to have excellent flexibility in the slide-in state so that the bending portion 730b is flexibly bent into the internal space 7101 of the first housing 710.

According to the embodiment, the flexible display 730 may be divided depending on the degree of movement. In the embodiment, the flexible display 730 may be divided into the first display portion having a first degree of movement, and the second display portion having a second degree of movement smaller than the first degree of movement. In the embodiment, the first display portion may be the bending portion 730b that is bent by the sliding operations of the first housing 710 and the second housing 720. The second display portion may be the first planar portion 730a and the second planar portion 730b kept planar during the sliding operation of the electronic device 700. In the embodiment, the first protective material 491 may be disposed on lateral surface of the bending portion 730b. The second protective material 492 may be disposed on the lateral surface of the first planar portion 730a and the lateral surface of the second planar portion 730b. The first protective material 491 may accommodate the motion of the bending portion 730b of the flexible display 730 and improve the durability of the lateral surface of the bending portion 730b. The second protective material 492 may improve the durability of the lateral surfaces of the first planar portion 730a and the second planar portion 730b of the flexible display 730.

The electronic device according to the embodiment of the present disclosure may include the hinge device 140, the first housing 110 connected to the hinge device, the second housing 120 connected to the hinge device so as to be rotatable relative to the first housing, and the flexible display 400 supported by the first housing and the second housing, in which the flexible display includes the first display portion having the first degree of movement in accordance with the rotational operations of the first housing and the second housing, the second display portion having the second degree of movement smaller than the first degree of movement in accordance with the rotational operations of the first housing and the second housing, the first protective material 491 positioned to cover at least a part of the lateral surface of the first display portion and having the first modulus, and the second protective material 492 positioned to cover at least a part of the lateral surface of the second display portion and having the second modulus higher than the first modulus.

In addition, the first display portion may include the folding portion 130c configured to be folded or unfolded in accordance with the rotational operations of the first housing and the second housing and having the lateral surface on which the first protective material is positioned, and the second display portion may include the planar portions 130a and 130b configured to be kept planar during the rotational operations of the first housing and the second housing and having the lateral surfaces on which the second protective material is positioned.

In addition, the flexible display may include the plurality of layers, the first display portion may include the first layer S1 among the plurality of layers and positioned above the second display portion, the second display portion may include the second layer S2 positioned below the first layer among the plurality of layers, the first protective material may be positioned to cover at least a part of the lateral surface of the first layer, and the second protective material may be positioned to cover at least a part of the lateral surface of the second layer.

In addition, the first layer may include the window layer 410, and the second layer may include the display panel 430 positioned below the window layer.

In addition, the flexible display may include the support plate 450, the first layer may be positioned above the support plate, and the second layer may be positioned below the support plate.

In addition, the first layer, the second layer, and the support plate may be aligned with one another on at least one edge when the flexible display is viewed in the perpendicular direction.

In addition, the flexible display may include the window layer 410, the display panel 430 disposed below the window layer, the planar portion of the display panel, and the bending portion 432 extending from the planar portion toward the back surface of the display panel, the first protective material may be positioned to cover at least a part of the lateral surface of the window layer, and the second protective material may be positioned to partially cover at least a part of the bending portion.

In addition, the electronic device may further include the lateral members 113 and 123 configured to define at least a part of the lateral surface of the electronic device and configured to surround the lateral surface of the flexible display, and the flexible display may include the window layer 410, the display panel 430 disposed below the window layer, the bending portion 432 extending from the planar portion of the display panel toward the back surface of the display panel, the first edge area 401 in which the bending portion is positioned, the second edge area 402 extending from the first edge area in the perpendicular direction, the third edge area 403 extending from the second edge area in the direction parallel to the first edge area, and the fourth edge area 404 extending from the third edge area to the first edge area.

In addition, the electronic device may further include the third protective material 493 positioned between the lateral surface of at least a part of the window layer, the window layer, and the display panel.

In addition, the electronic device may further include the fourth protective material 494 positioned to cover at least a part of the bending portion.

In addition, the first display portion may include the folding portion 130c configured to be folded or unfolded in accordance with the rotational operations of the first housing and the second housing and having the lateral surface on which the first protective material is positioned, the second display portion may include the planar portions 130a and 130b configured to be kept planar during the rotational operations of the first housing and the second housing and having the lateral surfaces on which the second protective material is positioned, and the shortest distance (a2-a1) between the lateral member and the first protective material positioned on the lateral surface of the folding portion in the second edge area and the fourth edge area may be longer than the shortest distance (a4-a3) between the lateral member and the second protective material positioned on the lateral surface of the planar portion in the second edge area and the fourth edge area.

In addition, the first display portion may include the folding portion 130c configured to be folded or unfolded in accordance with the rotational operations of the first housing and the second housing and having the lateral surface on which the first protective material is positioned, the second display portion may include the planar portions 130a and 130b configured to be kept planar during the rotational operations of the first housing and the second housing and having the lateral surfaces on which the second protective material is positioned, and the shortest distance (c) between the lateral member and the fourth protective material positioned on the bending portion may be longer than the shortest distance (a2-a1) between the lateral member and the first protective material positioned on the lateral surface of the folding portion in the second edge area and the fourth edge area and the shortest distance (a4-a3) between the lateral member and the second protective material positioned on the lateral surface of the planar portion in the second edge area and the fourth edge area.

In addition, the first protective material may have the first hardness, and the second protective material may have the second hardness higher than the first hardness.

In addition, the electronic device may further include the lateral members 113 and 123 configured to define at least a part of the lateral surface of the electronic device and configured to surround the lateral surface of the flexible display, the support members 1131 and 1231 extending from the lateral member and positioned below the flexible display, the fifth protective material positioned between the first display portion and the support member, and the sixth protective material positioned between the second display portion and the support member and having the modulus higher than the modulus of the fifth protective material.

In addition, the first protective material may be identical to the fifth protective material, and the second protective material may be identical to the sixth protective material.

In addition, the edge of the window layer in the second edge area and the fourth edge area may further protrude toward the lateral member than the edges of the plurality of layers of the flexible display disposed below the window layer.

In addition, the edge of the window layer may extend toward the lateral member so as to at least partially overlap the bending portion when the flexible display is viewed perpendicularly.

In addition, the electronic device may further include the molding part 510 disposed to surround at least some of the first edge area, the second edge area, the third edge area, and the fourth edge area, and at least one protection member 520 embedded in the molding part and disposed to surround at least some of the first edge area, the second edge area, the third edge area, and the fourth edge area.

The electronic device 100 according to the embodiment of the present disclosure may include the first housing 110, the second housing 120, the hinge device 140 configured to connect the first housing and the second housing so that the first housing and the second housing are foldable, and the flexible display 400 supported by the first housing and the second housing and including the plurality of layers, and the flexible display may include the first layer S1 having the first amount of slip movement in accordance with the folding operation and the unfolding operation of the first housing and the second housing, the second layer S2 having the second amount of slip movement smaller than the first amount of slip movement in accordance with the folding operation and the unfolding operation of the first housing and the second housing and positioned below the first layer, the first protective material 491 positioned to cover at least a part of the lateral surface of the first layer and having the first modulus, and the second protective material 492 positioned to cover at least a part of the lateral surface of the second layer and having the second modulus higher than the first modulus.

The electronic device 100 according to the embodiment of the present disclosure may include the first housing 110, the second housing 120, the hinge device 140 configured to connect the first housing and the second housing so that the first housing and the second housing are foldable, and the flexible display 400 supported by the first housing and the second housing, and the flexible display may include the folding portion 130c configured to be bent in accordance with the folding operations of the first housing and the second housing, the planar portions 130a and 130b configured to be kept planar during the folding operations of the first housing and the second housing, the first protective material 491 positioned on at least a part of the lateral surface of the folding portion and having the first modulus, and the second protective material 492 positioned on at least a part of the lateral surface of the planar portion and having the second modulus higher than the first modulus.

The flexible display 400 according to the embodiment of the present disclosure may be divided into the first display portion and the second display portion depending on the degree of movement or the deformation amount. The soft protective material (e.g., the first protective material 491) may be disposed on the lateral surface of the first display portion having a relatively large degree of movement (e.g., the folding portion 130c of the flexible display or the layers having a relatively large amount of occurrence of a slip among the plurality of layers of the flexible display). The hard protective material (e.g., the second protective material 492) may be disposed on the lateral surface of the second display portion having a relatively small degree of movement (e.g., the planar portions 130a and 130b of the flexible display or the layers having a relatively small amount of occurrence of a slip among the plurality of layers of the flexible display). Therefore, in the flexible display 400, the movement or deformation of the portion, which has a relatively large degree of movement or a relatively large deformation amount, may be allowed and the durability of the portion, which has a relatively large degree of movement or a relatively large deformation amount, may be improved by the soft first protective material 491. In the flexible display 400, the durability of the portion, which has a relatively small degree of movement or a relatively small deformation amount, may be improved by the hard second protective material 492.

A foldable electronic display according to at least one embodiment may comprise a first layer and a second layer, the first layer being arranged adjacent to the second layer such that an edge is formed where the first layer and the second layer meet, the foldable display further comprising: a first protective material which is arranged to cover a first region of the edge; and a second protective material which is arranged to cover a second region of the edge.

The first protective material may cover both the first layer and the second layer. The second protective material may cover both the first layer and the second layer.

The first and second layers may comprise a window layer, a polarizing layer, a display panel, a polymer layer, a support plate and a reinforcement plate. The display may comprise additional layers.

In the foldable electronic display according to the embodiment it may be that the first protective material has a first modulus and the second material has a second modulus greater than the first modulus. It may be that the second protective material is relatively harder than the first protective material. It may be that the second protective material is relatively less elastic than the first protective material. It may be that the first protective material experiences greater elastic deformation under an equivalent load than the second protective material. It may be that the first protective material experiences greater elastic deformation under an equivalent load than the second protective material when measured in a direction parallel to the edge.

In the foldable electronic display according to the embodiment it may be that: the foldable electronic display is arranged to have a greater degree of movement in the first region than in the second region. The foldable electronic display may be arranged to bend, hinge or otherwise deform at the first region. The second region may remain relatively rigid compared to the first region when in use. The first region may correspond to a hinge member supporting the foldable electronic display. The second region may correspond to one or more support members supporting the foldable electronic display and which are attached to the hinge member.

In a part of the second region of the foldable electronic display the first layer may comprise a curved part which extends beyond the second layer and encloses the edge, a third protective material being arranged to cover at least a part of an outer surface of the curved part. The third protective material may have a third modulus which is different to the first modulus and the second modulus. A fourth protective material may be arranged to cover at least a part of an outer surface of the curved part. The fourth protective material may have a fourth modulus which is different to the first modulus, the second modulus and the third modulus.

An electronic device according to at least one embodiment may comprise a foldable electronic display as described above. The electronic device may further comprise a housing which supports the foldable electronic display. The housing may comprise a hinge member which corresponds to the first region of the edge. The housing may comprise one or more support members which correspond to the second region of the edge. The housing may comprise a lateral member which is arranged adjacent to at least one of the first and second protective materials, on a side of the protective material which is opposite to the display. It may be that the lateral member does not touch the protective material.

It will be appreciated that all of the above-described embodiments, and their technical features, may be combined with one another in each and every combination, potentially unless there is a conflict between two embodiments or features. That is, each and every combination of two or more of the above-described embodiments is envisaged and included within the present disclosure. One or more features from any embodiment may be incorporated in any other embodiment, and provide a corresponding advantage or advantages.

In addition, various effects that can be directly or indirectly identified through the present document may be provided.

The effects obtained by the present disclosure are not limited to the aforementioned effects, and other effects, which are not mentioned above, will be clearly understood by those skilled in the art from the following description.

## Claims

1. An electronic device comprising:
a first housing;
a second housing;
a hinge device configured to foldably connect the first housing and the second housing; and
a flexible display supported by the first housing and the second housing,
wherein the flexible display comprises:
a first display portion with a first degree of movement based on folding and unfolding operations of the first housing and the second housing;
a second display portion with a second degree of movement smaller than the first degree of movement based on folding and unfolding operations of the first housing and the second housing;
a first protective material covering at least a part of a lateral surface of the first display portion, the first protective material having a first modulus; and
a second protective material covering at least a part of a lateral surface of the second display portion, the second protective material having a second modulus greater than the first modulus.

2. The electronic device of claim 1, wherein the first display portion comprises a folding portion configured to fold or unfold together according to folding and unfolding operations of the first housing and the second housing, the first protective material being positioned on a lateral surface of the folding portion, and
wherein the second display portion comprises a planar portion configured to remain planar during folding and unfolding operations of the first housing and the second housing, the second protective material being positioned on a lateral surface of the planar portion.

3. The electronic device of claim 1, wherein the flexible display includes a plurality of layers,
wherein the first display portion is positioned on an upper portion of the second display portion and comprises a first layer of the plurality of the layers,
wherein the second display portion comprises a second layer of the plurality of the layers positioned below the first layer,
wherein the first protective material is positioned to cover at least a part of a lateral surface of the first layer, and
wherein the second protective material is positioned to cover at least a part of a lateral surface of the second layer.

4. The electronic device of claim 3, wherein the first layer comprises a window layer, and the second layer comprises a display panel positioned below the window layer.

5. The electronic device of claim 3, wherein the flexible display includes a support plate
wherein the first layer is positioned on an upper portion of the support plate, and
wherein the second layer is positioned on a lower portion of the support plate.

6. The electronic device of claim 5, wherein the first layer, the second layer and the support plate are aligned with each other at least one edge when viewed from a vertical direction of the flexible display.

7. The electronic device of claim 1, wherein the flexible display comprises a window layer, a display panel disposed below the window layer, and a bending portion extending from a planar portion of the display panel toward a back surface of the display panel,
wherein the first protective material is positioned to cover at least a part of the lateral surface of the window layer, and
wherein the second protective material is positioned to cover at least a part of the bending portion.

8. The electronic device of claim 1, further comprising a lateral member configured to form at least a part of the electronic device and to surround a lateral surface of the flexible display,
wherein the flexible display comprises:
a window layer, a display panel disposed below the window layer, and a bending portion extending from a planar portion of the display panel toward a back surface of the display panel,
a first edge area in which the bending portion is positioned,
a second edge area extending in a vertical direction from the first edge area,
a third edge area extending from the second edge area in a direction parallel to the first edge area, and
a fourth edge area extending from the third edge area to the first edge area.

9. The electronic device of claim 8, further comprising a third protective material positioned on at least a portion of the side of the window layer and between the window layer and the display panel, and
a fourth protective material positioned to cover at least a portion of the bending portion.

10. The electronic device of claim 9, wherein the first display portion comprises a folding portion configured to fold or unfold together according to folding and unfolding operations of the first housing and the second housing, the first protective material being positioned on a lateral surface of the folding portion,
wherein the second display portion comprises a planar portion configured to remain planar during folding and unfolding operations of the first housing and the second housing, the second protective material being positioned on a lateral surface of the planar portion, and
a shortest distance (a2-a1) between the first protection material positioned at a side surface of the folding portion and the side member positioned at a side surface of the folding portion in the second edge area and the fourth edge area is larger than a shortest distance (a4-a3) between the second protection material positioned at a side surface of the planar part and the side member in the second edge area and the fourth edge area.

11. The electronic device of claim 10, wherein the first display part comprises a folding portion configured to fold or unfold together according to folding and unfolding operations of the first housing and the second housing, the first protective material being positioned on a lateral surface of the folding portion,
wherein the second display portion comprises a planar portion configured to remain planar during folding and unfolding operations of the first housing and the second housing, the second protective material being positioned on a lateral surface of the planar portion, and
a shortest distance (c) between the fourth protection material located in the bending portion and the side member is larger than the shortest distance (a2-a1) between the first protection material located at the side surface of the folding portion in the second edge area and the fourth edge area and the shortest distance (a4-a3) between the second protection material located at the side surface of the flat part and the side member in the fourth edge area.

12. The electronic device of claim 1, further comprising:
a lateral member configured to form at least a part of a lateral surface of the electronic device and to surround a lateral surface of the flexible display;
a support member extending from the lateral member so as to be positioned below the flexible display;
a fifth protective material positioned between the first display portion and the support member; and
a sixth protective material positioned between the second display portion and the support member, the sixth protective material having a modulus higher than a modulus of the fifth protective material.

13. The electronic device of claim 12, wherein the first protective material is identical to the fifth protective material, and the second protective material is identical to the sixth protective material.

14. The electronic device of claim 8, wherein the edge of the window layer in the second edge area and the fourth edge area protrudes more toward the side member than the edges of the plurality of layers of the flexible display disposed below the window layer.

15. The electronic device of claim 8, wherein the edge of the window layer extends toward the side member so that at least a portion overlaps the bending portion when the flexible display is viewed vertically.
